(19) **Europäisches Patentamt European Patent Office Office européen des brevets**

(11) **EP 3 854 472 A1**

(12) **EUROPEAN PATENT APPLICATION**
published in accordance with Art. 153(4) EPC

(43) Date of publication:
28.07.2021 Bulletin 2021/30

(21) Application number: 19862847.1

(22) Date of filing: 18.09.2019

(51) Int Cl.:
*B01D 69/02* (2006.01)    *B01D 61/00* (2006.01)
*B01D 63/02* (2006.01)    *B01D 69/08* (2006.01)
*B01D 69/12* (2006.01)    *B01D 71/68* (2006.01)
*D01F 1/08* (2006.01)    *D01F 6/76* (2006.01)

(86) International application number:
PCT/JP2019/036647

(87) International publication number:
WO 2020/059769 (26.03.2020 Gazette 2020/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.09.2018 JP 2018174215
16.07.2019 JP 2019131109

(71) Applicant: Asahi Kasei Kabushiki Kaisha
Tokyo 1000006 (JP)

(72) Inventors:
• INOUE, Fumiyoshi
Tokyo 100-0006 (JP)

• KUBOTA, Noboru
Tokyo 100-0006 (JP)
• MIKAWA, Masato
Tokyo 100-0006 (JP)
• FUJITA, Mitsuru
Tokyo 100-0006 (JP)
• KIGUCHI, Akira
Tokyo 100-0006 (JP)
• MIYAZAKI, Shinji
Tokyo 100-0006 (JP)

(74) Representative: D Young & Co LLP
120 Holborn
London EC1N 2DY (GB)

(54) **FORWARD OSMOSIS MEMBRANE AND MEMBRANE MODULE INCLUDING SAME**

(57) Provided are a composite forward osmosis membrane and a membrane module containing same. The composite forward osmosis membrane reduces salt back-diffusion and has high water-permeability, or is made of readily available materials and can be easily manufactured. Even when used at high pressure, separation between a substrate membrane support layer and an active separation layer does not occur in the composite forward osmosis membrane, and thus the composite forward osmosis membrane exhibits stable high performance. This composite forward osmosis membrane is composed of a hollow-fiber porous polymer substrate membrane, wherein an active separation layer is present on the inner surface or outer surface of the substrate membrane, an inner columnar void layer having a predetermined shape is present at a predetermined thickness with respect to the thickness of the substrate membrane from the inner surface toward the center of the substrate membrane, and an outer columnar void layer is present at a predetermined thickness with respect to the thickness of the membrane from the outer surface toward the center of the substrate membrane. The substrate membrane has a water permeability F1 within a predetermined range and a rejection ratio R within a predetermined range, or the substrate membrane support layer contains a polyether sulfone having an OH group. The membrane has a thickness within a predetermined range and a compression strength within a predetermined range.

EP 3 854 472 A1

FIG. 24

**Description**

FIELD

The present invention relates to a forward osmosis membrane for separating a solvent from a solvent-containing product and concentrating the solvent-containing product, and a membrane module containing the same. More specifically, the present invention relates to a forward osmosis membrane, a membrane module comprising the same, and a method for the production of the forward osmosis membrane module, in which the back-diffusion of salt is reduced, the forward osmosis membrane has high water permeability performance, and with which good performance can be maintained over long periods of time.

BACKGROUND

Forward osmosis membranes have attracted attention because they are membrane separation technologies which can achieve high concentration enrichment, which cannot be achieved with reverse osmosis membranes, with low energy consumption. By flowing the liquid to be concentrated (the liquid to be treated) through the forward osmosis membrane to one side and flowing the driving liquid having an osmotic pressure higher than that of the liquid to be treated to the other side, the solvent of the liquid to be treated moves toward the driving liquid side via the membrane using the osmotic pressure difference as a driving force. In particular, a composite forward osmosis membrane having an active separation layer serving as a semipermeable membrane on a surface of a substrate membrane support layer composed of a porous polymer membrane has high water permeability performance and a high salt rejection ratio.

A common problem in forward osmosis membranes is lower water permeability performance per membrane area compared to the desalination technology represented by reverse osmosis membranes. In order to improve the water permeability performance, it is important to optimally promote the diffusion of solutes in the vicinity of the membrane during operation and to reduce concentration polarization. To achieve this, development of a forward osmosis membrane comprising a substrate membrane support layer having a high porosity has been carried out.

In the following prior Patent Literature 1 and 2, a forward osmosis membrane having a suitable water permeability performance is obtained by forming an active separation layer on a surface of a substrate membrane having a structure having a high porosity using a polymer containing a hydrophilized polysulfone or polyether sulfone as a raw material.

Since it is difficult to form a defect-free active separation layer when forming a composite forward osmosis membrane, there is a problem that the back-diffusion of salt becomes significant. Therefore, Patent Literature 3 below proposes a method of forming an active separation layer on an inner surface of a hollow fiber membrane of a hollow fiber membrane module assembled in advance by an interfacial polymerization method, whereby a forward osmosis membrane having low back-diffusion of salt is obtained.

Furthermore, in composite forward osmosis membranes, it is important that the active separation layer not peel off from the substrate membrane support layer during use.

In this regard, Patent Literature 4 below describes improving the peel strength between a separation membrane support and a layer having a separation function by controlling the hydrophilicity of the nonwoven fabric constituting the separation membrane support.

Patent Literature 5 below describes that in a three-layer composite forward osmosis membrane comprising a nonwoven fabric, a polymer layer on the nonwoven fabric, and a polyamide-based dense layer on the polymer layer, peeling of the polymer layer and the dense layer is suppressed by adjusting the fiber diameter of the nonwoven fabric and the aspect ratio of the fibers.

Patent Literature 6 describes that in a composite separation membrane having a separation layer on a surface of a porous support membrane, peeling between the porous support membrane and the separation layer is suppressed by selecting materials having high affinity for each other as the material constituting the porous support membrane and the material constituting the separation layer.

[CITATION LIST]

[PATENT LITERATURE]

[PTL 1] Korean Patent Publication No. 2016-0080377
[PTL 2] US Patent Application Publication No. 2013/0313185
[PTL 3] WO 2016/027869
[PTL 4] Japanese Unexamined Patent Publication (Kokai) No. 2013-71106

[PTL 5] Japanese Unexamined Patent Publication (Kokai) No. 2014-213262
[PTL 6] WO 2015/141653

SUMMARY

[TECHNICAL PROBLEM]

However, in the method described in Patent Literature 1 or 2, though the water permeability performance is increased, there is a problem in that the solute in the driving liquid or the liquid to be treated tends to move into the liquid to be treated or the driving liquid via the forward osmosis membrane, i.e., in the case of the former, the back-diffusion of salt.
In the method described in Patent Literature 3, though the transfer of a solute from the driving liquid to the liquid to be treated (back-diffusion of salt) can be reduced, only a low water permeability performance can be achieved as compared with the method described in Patent Literature 1 or 2.
In light of such circumstances of the art, the object of the present invention is to provide a forward osmosis membrane and a membrane module containing the same which reduce the back-diffusion of salt and can achieve both high water permeability performance of the forward osmosis membrane, and in which the substrate membrane support layer and the active separation layer do not peel over long periods of time, and a method of manufacturing the forward osmosis membrane module.

[SOLUTION TO PROBLEM]

As a result of rigorous investigation and experimentation to achieve the object, the present inventors have unexpectedly discovered that a forward osmosis membrane having high water permeability performance and reduced back-diffusion of salt can be obtained by imparting a hollow-fiber substrate membrane with a specific membrane cross-sectional structure, setting the water permeability performance and dextran rejection ratio of the substrate membrane to specific ranges, and further forming an active separation layer on the surface of the substrate membrane. Further, by using a polymer having a specific functional group for the substrate membrane support layer and appropriately adjusting the membrane thickness and the compressive strength of the substrate membrane, a composite forward osmosis membrane in which the substrate membrane support layer and the active separation layer unlikely to peel can be obtained, and have completed the present invention.
In other words, the present invention is as follows.

[1] A composite forward osmosis membrane composed of a hollow-fiber porous polymer substrate membrane, wherein an active separation layer is present on an inner surface or an outer surface of the substrate membrane, an inner columnar void layer having a width of 0.1 $\mu$m to 5.0 $\mu$m is present from the inner surface toward a central part of the substrate membrane at a thickness of 1% to 25% with respect to a membrane thickness of the substrate membrane, an outer columnar void layer is present from the outer surface toward the central part of the substrate membrane at a thickness of 25% to 70% with respect to the membrane thickness, and the substrate membrane simultaneously satisfies formulas (1) and (2) below:

$$1050 \leq F1 \leq 5000 \quad ...\text{formula (1)}$$

where F1 (kg/(m$^2$ × hr)) = L1 (kg) / (M (m$^2$) × H (hr)), F1 represents the water permeate flux of the substrate membrane, L1 is the amount of water which passes through to the outside of the substrate membrane when water is supplied to the inside of the substrate membrane at a pressure of 100 kPa, M is the inner surface area of the substrate membrane, and H is the measurement time, and

$$50 \leq R \leq 85 \quad ...\text{formula (2)}$$

where R (%) = {1 - (r1 (ppm) / r2 (ppm))} × 100, R is the rejection ratio of dextran T200 when a dextran T200 aqueous solution is passed through the inside of the substrate membrane at a linear velocity of 100 cm/sec and a back pressure of 30 kPa, r1 is the dextran concentration in the filtrate that has permeated to the outside of the substrate membrane, and r2 is the dextran concentration in a 0.10 mass% aqueous solution of dextran T200 before liquid passage.
[2] The composite forward osmosis membrane according to [1], wherein the water permeate flux F1 is 1800 (kg/(m$^2$ × hr)) to 4000 (kg/(m$^2$ × hr)).

[3] The composite forward osmosis membrane according to [2], wherein the water permeate flux F1 is 2000 (kg/(m$^2$ × hr)) to 3200 (kg/(m$^2$ × hr)).

[4] The composite forward osmosis membrane according to any one of [1] to [3], wherein the rejection ratio R is 60% to 75%.

[5] The composite forward osmosis membrane according to any one of [1] to [4], wherein the inner columnar void layer having a width of 0.5 μm to 3.0 μm is present from the inner surface to the central part of the hollow fiber membrane at a thickness of 3% to 15% with respect to the membrane thickness of the hollow fiber membrane, and the outer columnar void layer is present from the outer surface toward the central part of the hollow fiber membrane at a thickness of 40% to 60% of the membrane thickness.

[6] The composite forward osmosis membrane according to any one of [1] to [5], wherein a finger-like void layer is further present between the outer columnar void layer and the inner columnar void layer at a thickness of 10% to 50% with respect to the membrane thickness of the substrate membrane.

[7] The composite forward osmosis membrane according to any one of [1] to [6], wherein the substrate membrane is composed of a mixture of a polysulfone-based polymer and a polysulfone-based polymer having a terminal modified with any of an amino group, a carboxy group, a hydroxy group, or a nitro group.

[8] The composite forward osmosis membrane according to [7], wherein the polysulfone-based polymer is polyether sulfone.

[9] A composite forward osmosis membrane comprising a substrate membrane support layer, and an active separation layer laminated on the substrate membrane support layer, wherein
the substrate membrane support layer contains one or more polymers selected from the group consisting of polysulfone, polyether sulfone, polyacrylonitrile, and polyvinylpyrrolidone, and this polymer has a hydroxy group,
a membrane thickness of the substrate membrane support layer is 50 μm to 250 μm, and
a compressive strength of the substrate membrane support layer is 0.25 MPa to 0.90 MPa.

[10] The composite forward osmosis membrane according to [9], wherein the polymer is polyether sulfone.

[11] The composite forward osmosis membrane according to [10] or [10], wherein a detachment pressure of the composite forward osmosis membrane is 20 kPa to 200 kPa.

[12] The composite forward osmosis membrane according to any one of [8] to [11], wherein the substrate membrane is composed of a mixture of a polyether sulfone and a polyether sulfone having a terminal modified with a hydroxy group, and the mixing ratio thereof is 80:20 to less than 1:99.

[13] The composite forward osmosis membrane according to any one of [9] to [12], wherein the active separation layer contains one or more polymers selected from the group consisting of polyamide, polyurea, and polybenzimidazole.

[14] The composite forward osmosis membrane according to [13], wherein the active separation layer further contains one or more additives selected from carbon nanotubes and graphene oxide.

[15] The composite forward osmosis membrane according to any one of [9] to [14], wherein the composite forward osmosis membrane is a hollow-fiber composite forward osmosis membrane.

[16] The composite forward osmosis membrane according to [15], wherein an inner diameter of the hollow-fiber composite forward osmosis membrane is 500 μm to 1,500 μm.

[17] The composite forward osmosis membrane according to [15] or [16], wherein the ratio ($d_O/d_I$) of an inner diameter ($d_I$) to an outer diameter ($d_O$) of the hollow-fiber composite forward osmosis membrane is 1.10 to 1.60.

[18] A composite forward osmosis membrane module, wherein a fiber bundle in which a plurality of the composite forward osmosis membrane according to any one of [1] to [17] are bundled is housed in a housing.

[19] A method for the production of the composite forward osmosis membrane according to any one of [9] to [17], the method comprising:

a substrate membrane support layer preparation process for preparing a substrate membrane support layer, and an active separation layer formation process for forming an active separation layer on the substrate membrane support layer, wherein
the substrate membrane support layer to be prepared in the substrate membrane support layer preparation process contains one or more polymers selected from the group consisting of polysulfone, polyether sulfone, polyacrylonitrile, and polyvinylpyrrolidone, and the polymer has an OH group,
the active separation layer formation process has the following steps and is carried out by interfacial polymerization of a first monomer and a second monomer,
the active separation layer formation process comprising:

a first solution liquid membrane formation step for forming a liquid membrane of a first solution containing the first monomer on one side of the substrate membrane support layer,
a solution contact step for contacting the liquid membrane of the first solution with a second solution containing the second monomer, and

an active separation layer formation step for forming the active separation layer on the substrate membrane support layer by carrying interfacial polymerization while maintaining the contact between the liquid membrane of the first solution and the second solution.

[20] The method according to [19], wherein

the active separation layer is composed of a polyamide,

the first solution is an aqueous solution containing a polyfunctional aromatic amine as the first monomer and an aqueous solvent, and

the second solution is a non-aqueous solution containing a polyfunctional acid halide as the second monomer and a non-aqueous solvent.

[21] The method according to [19], wherein

the active separation layer is composed of a polyurea,

the first solution is an aqueous solution containing a polyfunctional aromatic amine as the first monomer and an aqueous solvent, and

the second solution is a non-aqueous solution containing a polyfunctional isocyanate as the second monomer and a non-aqueous solvent.

[ADVANTAGEOUS EFFECTS OF INVENTION]

Since the forward osmosis membrane of the present invention has high water permeability performance and reduced back-diffusion of salt, it is suitable for, for example, the concentration and dehydration of foods and chemical solutions, seawater desalination, brackish water desalination, the treatment of produced water discharged from gas fields, such as shale gas fields, and oil fields, and the concentration or dilution of fertilizer solutions. In particular, when the forward osmosis membrane of the present invention is applied to the concentration of foods and chemical solutions, it is possible to concentrate an object to be concentrated to a high degree without heating, and also to suppress the outflow or inflow of solutes, whereby non-heating concentration can be carried out, in which the deterioration of components and contamination of foreign matters are prevented. Even when the device is enlarged and the liquid to be treated is flowed at a high flow rate, it is possible to stably operate the composite forward osmosis membrane for long periods of time without breakage of the composite forward osmosis membrane.

BRIEF DESCRIPTION OF DRAWINGS

FIG. 1 is an electron micrograph of a cross-section obtained by freezing and cutting the substrate membrane of Example 1.

FIG. 2 shows the inner columnar void layer, the finger-like void layer, and the outer columnar void layer of the electron micrograph of a cross-section obtained by freezing and cutting the substrate membrane of Example 1.

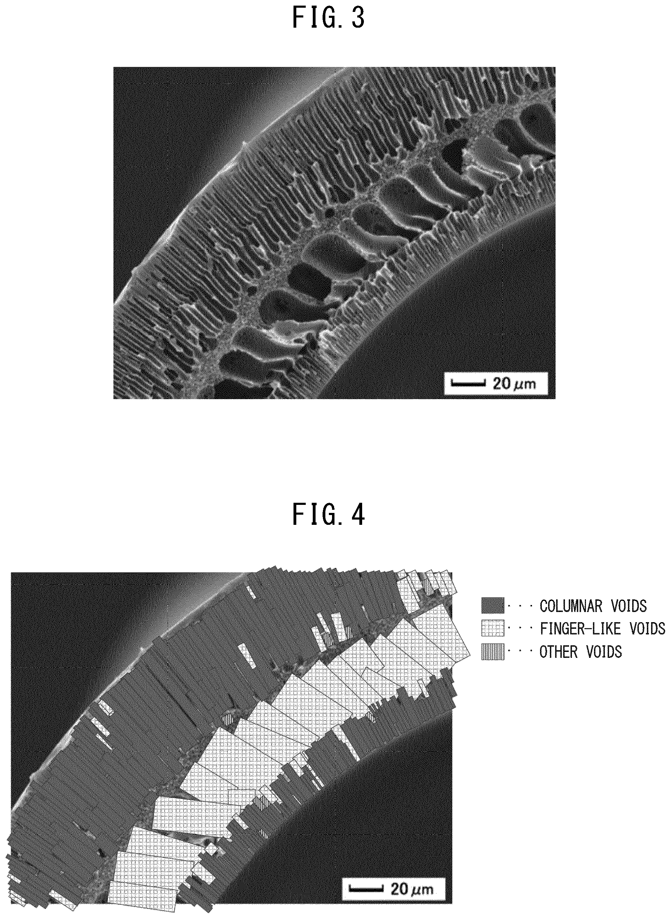

FIG. 3 is an electron micrograph of a cross-section obtained by freezing and cutting the substrate membrane of Example 2.

FIG. 4 shows the inner columnar void layer, the finger-like void layer, and the outer columnar void layer of the electron micrograph of a cross-section obtained by freezing and cutting the substrate membrane of Example 2.

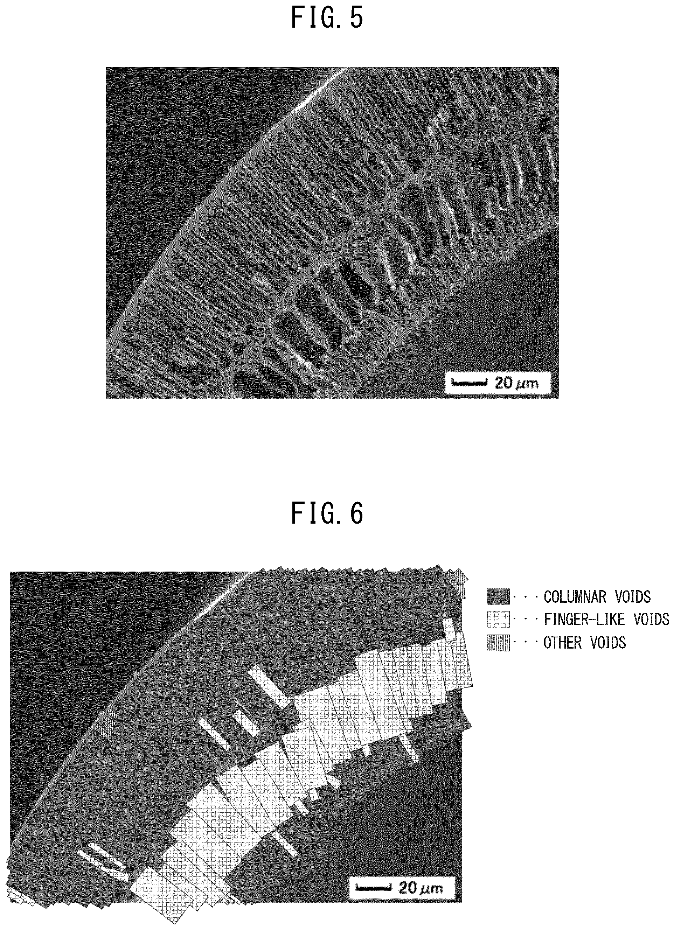

FIG. 5 is an electron micrograph of a cross-section obtained by freezing and cutting the substrate membrane of Example 3.

FIG. 6 shows the inner columnar void layer, the finger-like void layer, and the outer columnar void layer of the electron micrograph of a cross-section obtained by freezing and cutting the substrate membrane of Example 3.

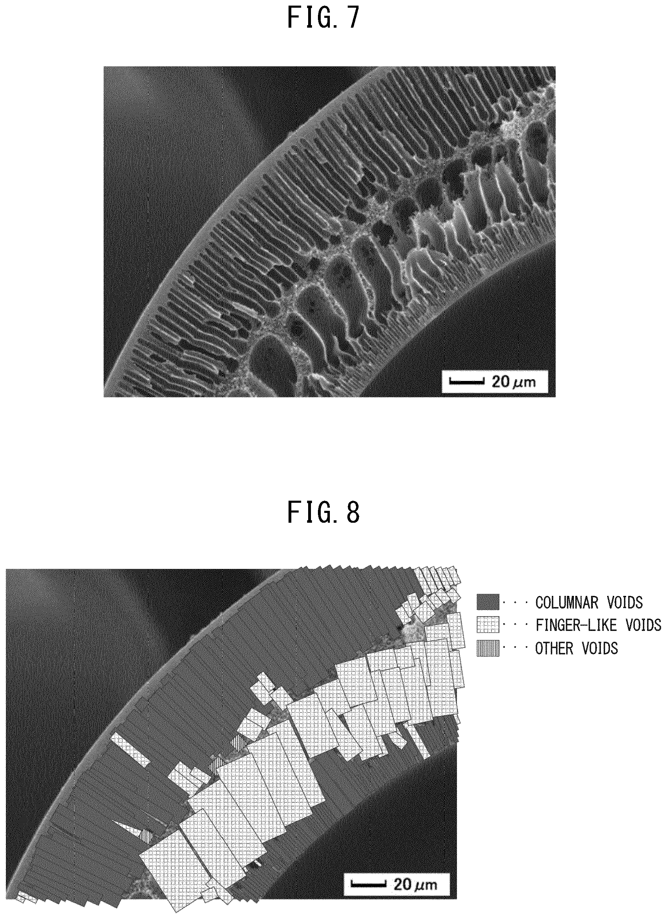

FIG. 7 is an electron micrograph of a cross-section obtained by freezing and cutting the substrate membrane of Example 4.

FIG. 8 shows the inner columnar void layer, the finger-like void layer, and the outer columnar void layer of the electron micrograph of a cross-section obtained by freezing and cutting the substrate membrane of Example 4.

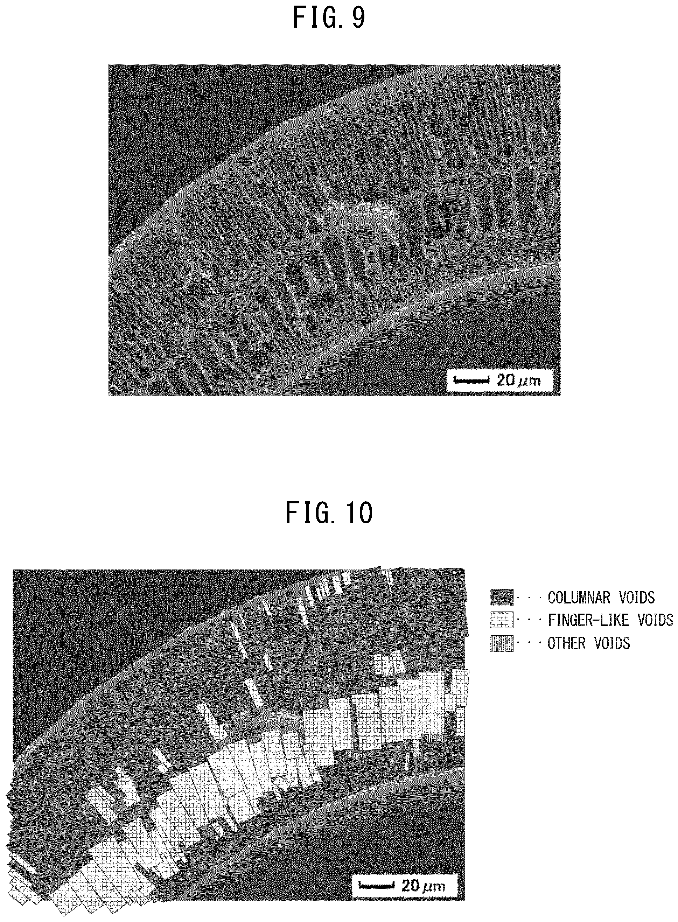

FIG. 9 is an electron micrograph of a cross-section obtained by freezing and cutting the substrate membrane of Example 5.

FIG. 10 shows the inner columnar void layer, the finger-like void layer, and the outer columnar void layer of the electron micrograph of a cross-section obtained by freezing and cutting the substrate membrane of Example 5.

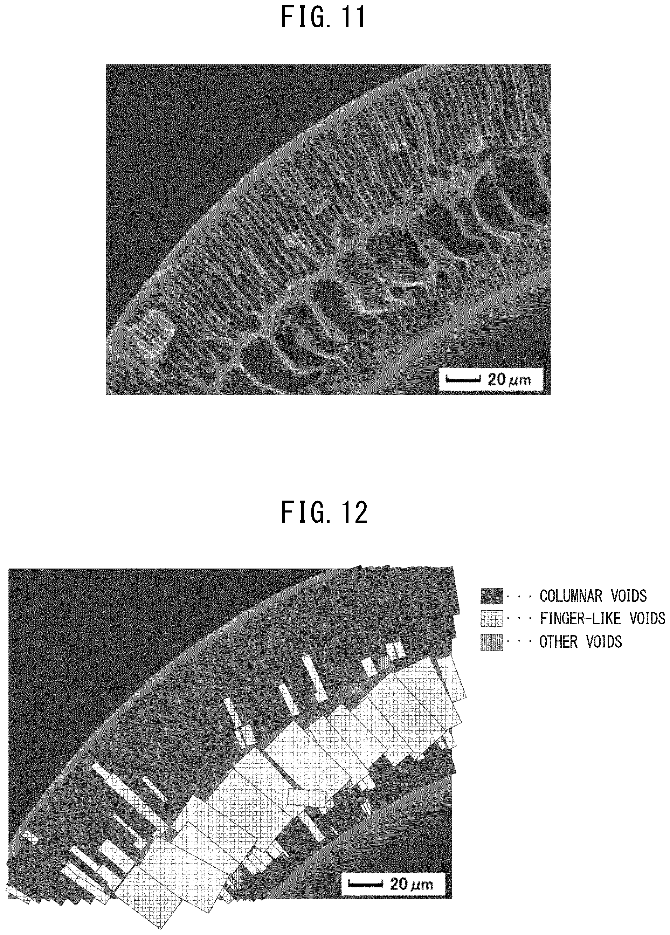

FIG. 11 is an electron micrograph of a cross-section obtained by freezing and cutting the substrate membrane of Example 6.

FIG. 12 shows the inner columnar void layer, the finger-like void layer, and the outer columnar void layer of the electron micrograph of a cross-section obtained by freezing and cutting the substrate membrane of Example 6.

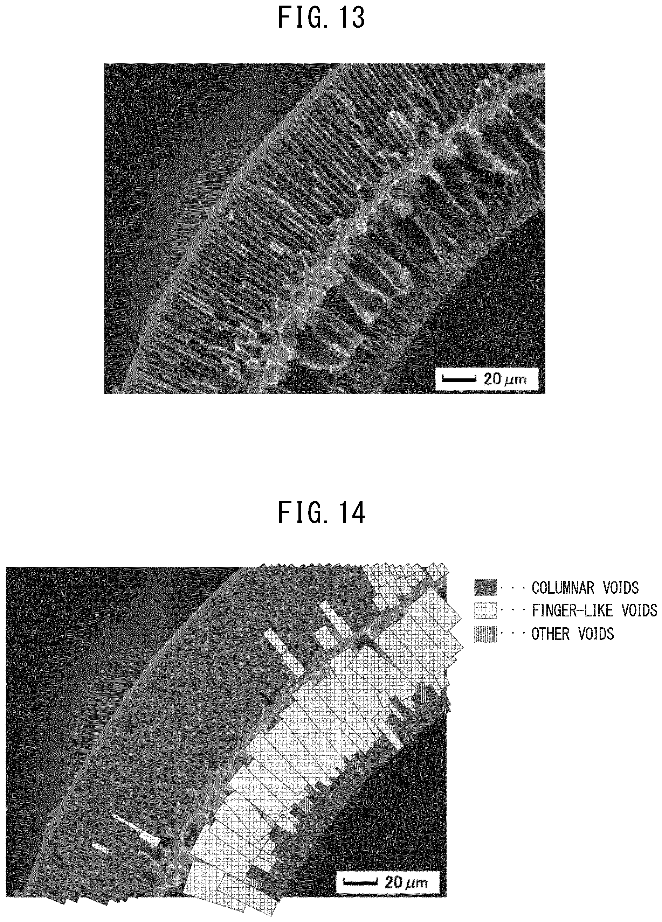

FIG. 13 is an electron micrograph of a cross-section obtained by freezing and cutting the substrate membrane of Example 7.

FIG. 14 shows the inner columnar void layer, the finger-like void layer, and the outer columnar void layer of the electron micrograph of a cross-section obtained by freezing and cutting the substrate membrane of Example 7.

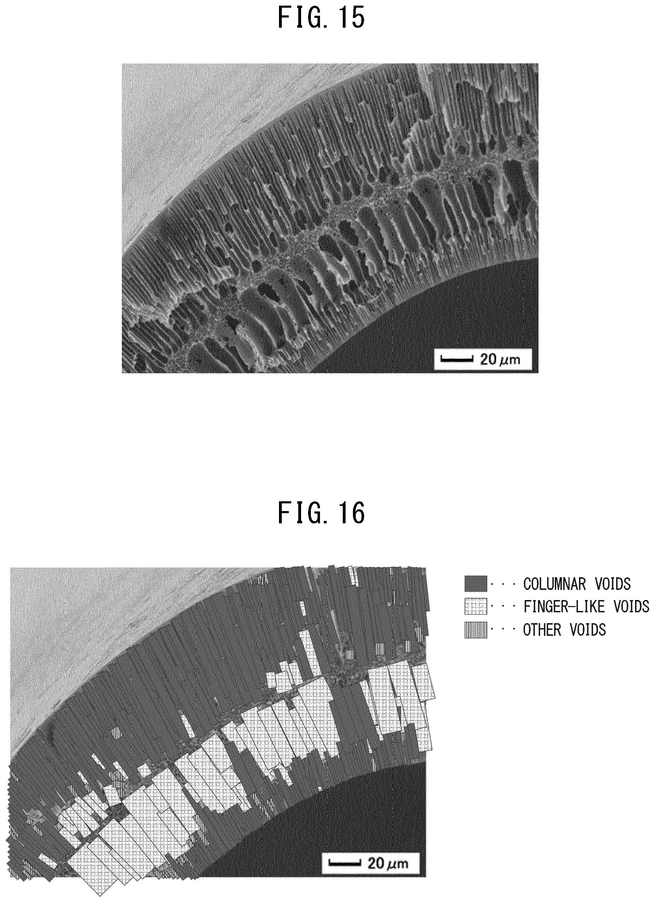

FIG. 15 is an electron micrograph of a cross-section obtained by freezing and cutting the substrate membrane of Example 8.

FIG. 16 shows the inner columnar void layer, the finger-like void layer, and the outer columnar void layer of the electron micrograph of a cross-section obtained by freezing and cutting the substrate membrane of Example 8.

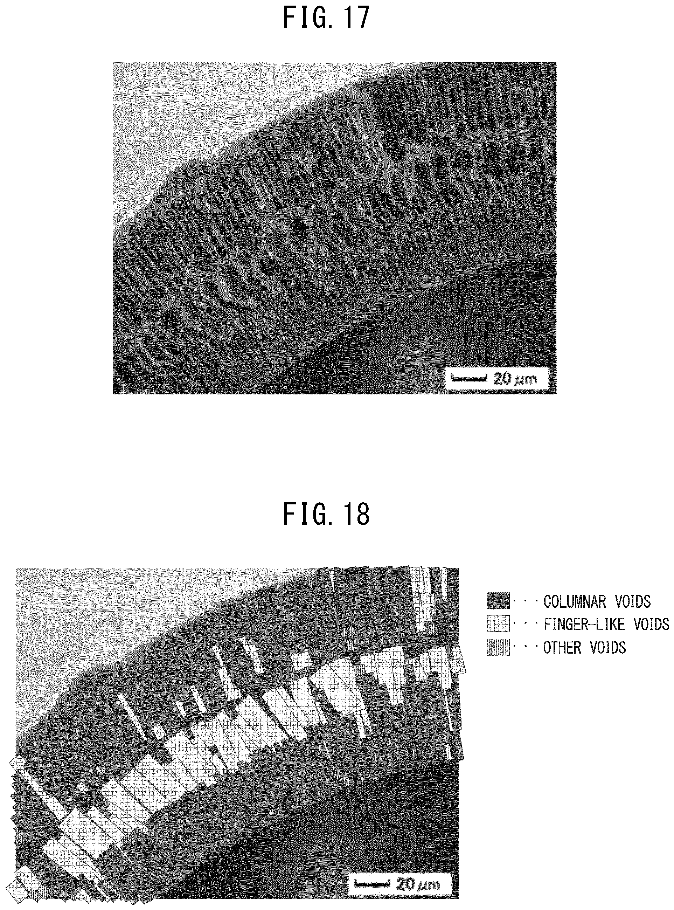

FIG. 17 is an electron micrograph of a cross-section obtained by freezing and cutting the substrate membrane of Comparative Example 1.

FIG. 18 shows the inner columnar void layer, the finger-like void layer, and the outer columnar void layer of the electron micrograph of a cross-section obtained by freezing and cutting the substrate membrane of Comparative Example 1.

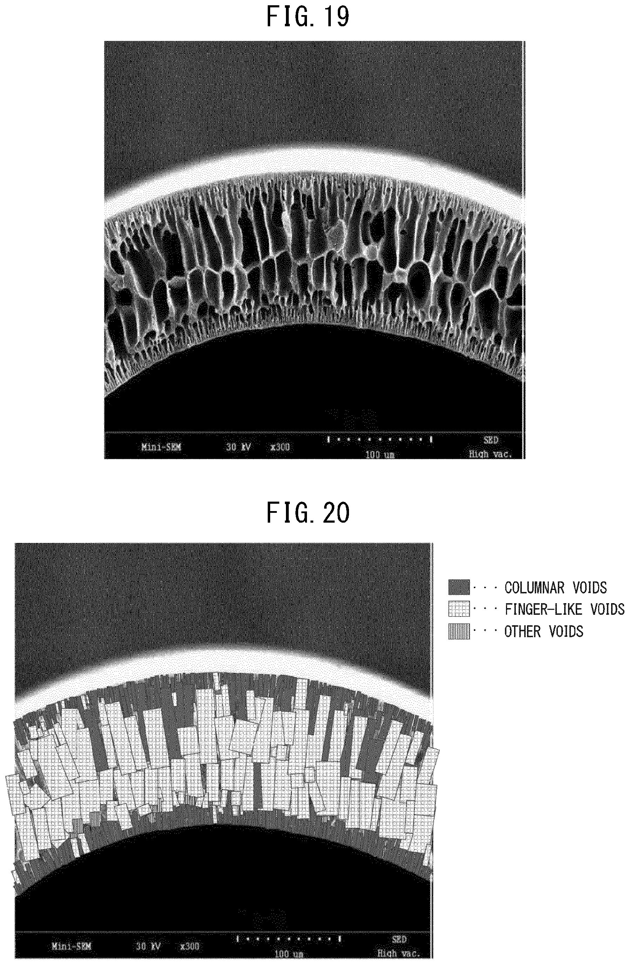

FIG. 19 is an electron micrograph of a cross-section obtained by freezing and cutting the substrate membrane of Comparative Example 2.

FIG. 20 shows the inner columnar void layer, the finger-like void layer, and the outer columnar void layer of the electron micrograph of a cross-section obtained by freezing and cutting the substrate membrane of Comparative Example 2.

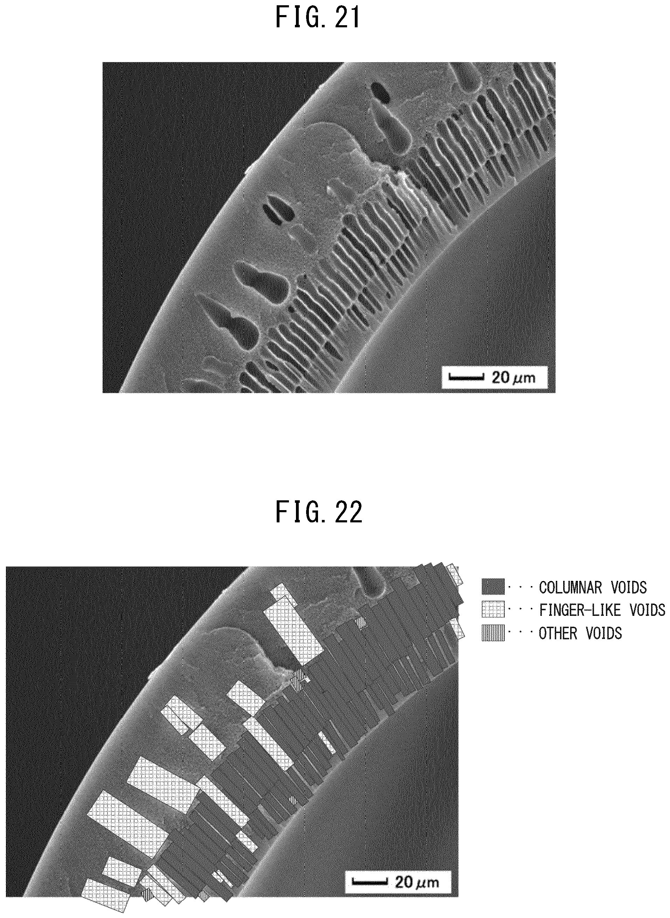

FIG. 21 is an electron micrograph of a cross-section obtained by freezing and cutting the substrate membrane of Comparative Example 3.

FIG. 22 shows the inner columnar void layer, the finger-like void layer, and the outer columnar void layer of the electron micrograph of a cross-section obtained by freezing and cutting the substrate membrane of Comparative Example 3.

FIG. 23 is a cross-sectional schematic view of an aspect of a forward osmosis membrane module.

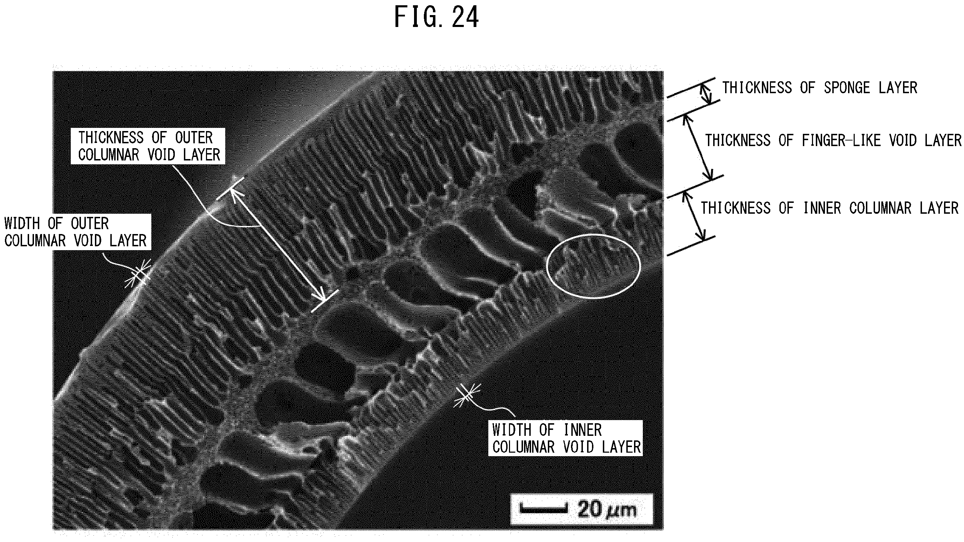

FIG. 24 is a view detailing the inner and outer columnar void layers, and the thicknesses and widths thereof, as well as the columnar void and finger-like void layers and the thicknesses thereof in the electron micrograph of a cross-section of a substrate membrane obtained by freezing and cutting.

## DESCRIPTION OF EMBODIMENTS

The embodiments of the present invention will be described in detail below by way of nonlimiting examples.

«Composite Forward Osmosis Membranes»

The composite forward osmosis membrane of the present embodiment is a composite hollow fiber membrane composed of an active separation layer composed of a dense semipermeable membrane which allows the permeation of only specific substances (e.g., water as a solvent permeates and an inorganic salt as a solute substantially does not permeate), and a porous polymer substrate membrane which physically supports the active separation layer on an inner surface or an outer surface of the membrane. From the viewpoint of preventing the active separation layer from being physically broken, it is preferable that the active separation layer be applied to the inside of the hollow fiber.

The composite forward osmosis membrane of the present embodiment is a forward osmosis membrane composed of a substrate membrane and an active separation layer, wherein the active separation layer is present on an inner surface or an outer surface of the substrate membrane, an inner columnar void layer having a width of 0.1 $\mu$m to 5.0 $\mu$m is present from the inner surface toward a central part of the substrate membrane at a thickness of 1% to 25% with respect to a membrane thickness of the substrate membrane, an outer columnar void layer is present from the outer surface toward the central part of the substrate membrane at a thickness of 25% to 70% with respect to the membrane thickness, and the substrate membrane simultaneously satisfies formulas (1) and (2) below:

$$1050 \leq F1 \leq 5000 \quad \text{...formula (1)}$$

$$50 \leq R \leq 85 \quad \text{...formula (2)}$$

F1 (kg/(m$^2$ × hr)) of formula (1) represents the water permeability performance of the substrate membrane and is represented by formula (3) below:

$$F1\ (kg/(m^2 \times hr)) = L1\ (kg)\ /\ (M\ (m^2) \times H\ (hr)) \quad ...\text{formula (3)}.$$

L1 (kg) is the amount of water which passes through to the outside of the substrate membrane when water is supplied to the inside of the substrate membrane at a pressure of 100 kPa, M ($m^2$) is the inner surface area of the substrate membrane, and H (hr) is the measurement time.

R (%) of formula (2) is the rejection ratio of dextran T200 of substrate membrane and is represented by formula (4) below:

$$R\ (\%) = \{1 - (r1\ (ppm)\ /\ r2\ (ppm))\} \times 100 \quad ...\text{formula (4)}$$

where r1 (ppm) is the dextran concentration in the filtrate that has permeated to the outside of the substrate membrane when a 0.10 mass% dextran T200 aqueous solution is passed through the inside of the substrate membrane at a linear velocity of 100 cm/sec and a back pressure of 30 kPa, and r2 (ppm) is the dextran concentration in the dextran aqueous solution before liquid passage.

The linear velocity refers to the value obtained by dividing the flow rate (mL/sec) when the dextran solution is flowed without connecting the hollow fiber substrate membrane to the device by the cross-sectional area ($cm^2$) of the hollow fiber substrate membrane. The back pressure (kPa) refers to the value shown by a pressure gauge attached to the back of the membrane when the substrate membrane is connected and a 0.10 mass% aqueous solution of dextran T200 is flowed. The value obtained by multiplying the inner diameter of the hollow fiber substrate membrane cross-section by the circumferential ratio $\pi$ is used as the cross-sectional area of the membrane.

The performance of the composite forward osmosis membrane is evaluated by the water permeability F2 and the back-diffusion of salt RSF when pure water is used as the liquid to be treated and 3.5 mass% of sodium chloride aqueous solution is used as the driving liquid. F2 refers to the speed of movement of water moving from the liquid to be treated side to the driving liquid side due to the forward osmosis phenomenon, and RSF refers to the speed of movement of solute mixed from the driving liquid to the liquid to be treated side. In a preferred composite forward osmosis membrane, F2 becomes larger and RSF becomes smaller because water is allowed to permeate but the migration of sodium chloride in the driving liquid is rejected by the active separation layer.

F2 is represented by the following formula (5):

$$F2 = L2\ /\ (M \times H) \quad ...\text{formula (5)}$$

where F2 (kg/($m^2 \times$ hr)) represents the water permeability performance of the forward osmosis membrane, L2 (kg) is the quantity of water permeated, M ($m^2$) is the inner surface area of the membrane, and H (hr) is the measurement time.

The higher the water permeate flux F2 (water permeability performance) of the composite forward osmosis membrane (obtained by obtaining an active separation layer) of the present embodiment, the more preferable, but from the viewpoint of achieving practical and highly efficient mass transfer, it is preferably 11.5 (kg/($m^2 \times$ hr)) or more. In addition, in order to prevent membrane clogging due to excessive concentration of the liquid to be treated, the water permeate flux F2 is preferably 200 (kg/($m^2 \times$ hr)) or less.

The back-diffusion of salt RSF is represented by the following formula (6):

$$RSF = G\ /\ (M \times H) \quad ...\text{formula (6)}$$

where RSF (g/($m^2 \times$ hr)) represents the back-diffusion of salt of the forward osmosis membrane, G (g) is the amount of salt permeated, M ($m^2$) is the inner surface area of the membrane, and H (hr) is the measurement time.

Though it is preferable that the back-diffusion of salt of the composite forward osmosis membrane of the present embodiment be small, if the back-diffusion of salt is large, a problem arises in that the solute in the driving liquid is mixed into the liquid to be treated or the solute in the liquid to be treated is mixed into the driving liquid, whereby the purity of the liquid to be treated concentrate is lowered, and the driving liquid is contaminated. From the viewpoint of preventing these problems, the back-diffusion of salt of the forward osmosis membrane of the present embodiment is preferably 2.0 (g/($m^2 \times$ h)) or less, and more preferably 1.5 (g/($m^2 \times$ h)) or less.

Detailed methods for measuring F1, R, F2, and RSF above will be described later.

The strength of the composite forward osmosis membrane of the present embodiment is evaluated in accordance with a long-term operability evaluation. Specific operation methods and pressure application are repeated and RSF fluctuations are observed. A detailed evaluation method of long-term operability evaluation will be described later.

The water permeate flux F1 and the rejection ratio R are characteristics of the substrate membrane when the active separation layer is not present, and the substrate membrane used for measuring these physical properties may be any of a substrate membrane before the active separation layer is applied, or a membrane obtained by breaking down and removing the active separation layer from a forward osmosis membrane which has become a composite hollow fiber membrane. The method for breaking down and removing the active separation layer will be described later.

«Substrate Membrane Support Layer»

<Polymer>

In the present invention, the term "polymer" refers to a molecule having a number average molecular weight of 5,000 or more.

The molecular weight of the polymer of the present embodiment is preferably 10,000 to 100,000 as a weight average molecular weight Mw in terms of polystyrene measured by gel permeation chromatography (GPC).

The substrate membrane support layer of the composite forward osmosis membrane of the present invention is composed of a mixture of a polysulfone-based polymer and a polysulfone-based polymer having a terminal modified with either an amino group, a carboxy group, a hydroxy group, or a nitro group. Alternatively, it comprises one more polymers selected from the group consisting of polysulfone, polyether sulfone, polyacrylonitrile, and polyvinylpyrrolidone, and these polymers have hydroxy groups. It is most preferable that the substrate membrane support layer of the present invention be composed of a polyether sulfone having a hydroxy group at its molecular terminal.

It is considered that the terminal polar functional group of the polymer constituting the substrate membrane support layer affects the membrane structure at the time of membrane formation. When the ratio of the polysulfone-based polymer terminal-modified with a terminal polar functional group (e.g., a hydroxy group) is increased, the substrate membrane water permeate flux F1 is improved. This is probably because the hydrophilicity is improved and the affinity with water molecules in the coagulation liquid thus becomes slightly higher.

When the ratio of the terminal polar functional group is excessively small, it is considered that the polymer becomes excessively dense at the time of formation of the substrate membrane support layer, and the number of pores on the surface of the membrane (i.e., the porosity of the surface) decreases, whereby the water permeability F1 of the substrate membrane, and thus, the forward osmosis membrane water permeability F2 become small.

The mixing ratio of the terminal polar functional group and the other terminal functional group in the polymer is preferably 20:80 to 99:1. From the viewpoint of improving F1, and thus F2, described above, and from the viewpoint of detachment pressure and long-term operability, which is described later, the mixing ratio is more preferably 30:70 to 99:1, further preferably 45:55 to 95:5, and particularly preferably 70:30 to 95:5. For example, in the case in which a polysulfone-based polymer is used, when the mixing ratio of the terminal polar functional group and the other terminal functional group is 20:80 to 99:1, the thickness of the inner columnar void layer tends to be reduced, whereby spinning can be stably carried out for long periods of time. The phrase "mixing ratio" in the present embodiment refers to the molar ratio of terminal functional groups.

The structure and molar ratio of the terminal polar functional groups of the polymer in the present embodiment can be identified using NMR. The details thereof will be described later.

It is considered that due to the presence of the polar functional group, the adhesive force with the active separation layer tends to be large, which makes it suitable for long-term operation.

In the present embodiment, it is preferable that the polymer contained in the substrate membrane support layer have a predetermined hydrophilicity. When the polymer has a predetermined hydrophilicity, it is considered that the affinity between the substrate membrane support layer and the active separation layer on the substrate membrane support layer increases, whereby the active separation layer is unlikely to peel, and long-term membrane use becomes possible.

From this viewpoint, the water contact angle of the flat membrane made of a polymer contained in the substrate membrane support layer is preferably 20° to 120°, more preferably 20° to 90°, and further preferably 50° to 70°.

The water contact angle of a flat membrane made of a polymer is measured by the method described in Reference Examples, which are described later.

<Substrate Membrane Dimensions>

From the viewpoint of storing a larger membrane area in a small volume, the shape of the substrate membrane in the present invention is preferably a hollow fiber shape. The phrase "hollow fiber" refers to a shape in which the inner diameter (diameter of a circle formed by the inner surface of the hollow fiber membrane cross-section) is 0.050 mm to 2.0 mm, the outer diameter (diameter of a circle formed by the outer surface of the hollow fiber membrane cross-section) is 0.080 mm to 5.0 mm, and satisfies $d_I < d_O$.

In some cases, it is necessary that the liquid to be treated containing an insoluble content pass through the hollow portion of the hollow fiber without trouble. From this viewpoint, it is preferable that the inner diameter of the hollow fiber composite forward osmosis membrane be larger. Conversely, when the composite forward osmosis membrane of the present invention is used in a modular manner, it is necessary to ensure that the effective membrane area per unit volume of the module is as large as possible. From this viewpoint, it is preferable that the inner diameter of the hollow fiber composite forward osmosis membrane be smaller. From the viewpoint of achieving both of these conditions, the inner diameter of the hollow fiber composite forward osmosis membrane is preferably 500 $\mu$m to 1,500 $\mu$m, and more preferably 600 $\mu$m to 1,200 $\mu$m.

The membrane thickness refers to the value obtained by dividing the difference between the outer diameter and the inner diameter by two in a cross-section obtained by cutting a hollow fiber substrate membrane in a plane perpendicular to a longitudinal direction. The inner diameter, the outer diameter, and the membrane thickness can be determined by observing the hollow fiber substrate membrane cross-section with an optical microscope. A cross-section obtained by breaking down the active separation layer of the composite forward osmosis membrane may be observed. The membrane thickness of the substrate membrane support layer is preferably 50 $\mu$m to 250 $\mu$m, more preferably 80 $\mu$m to 200 $\mu$m, and further preferably 100 $\mu$m to 180 $\mu$m. If the membrane thickness is excessively large, the water permeability of the forward osmosis membrane becomes small due to the effect of the internal concentration polarization of the substrate membrane.

The inner and outer diameters of the substrate membrane are expressed by $d_O/d_I$. The inner and outer diameter ratio is preferably 1.10 to 1.60, is more preferably 1.15 to 1.55, and is further preferably 1.20 to 1.50.

<Inner Columnar Void Layer>

In the forward osmosis membrane of the present embodiment, an inner columnar void layer having a width of 0.10 $\mu$m to 5.0 $\mu$m or less is present from an inner surface of the substrate membrane toward a central portion (a circle whose radius becomes a 0.25 $d_O$ + 0.25 $d_I$ is drawn so as to be a circle concentric with the outer peripheral circumference of a hollow fiber cross-section, which can be observed by cutting a hollow fiber membrane in a direction perpendicular to the longitudinal direction of the fiber) at a thickness of 1% or more and 25% or less with respect to a membrane thickness of the substrate membrane.

In the present embodiment, the phrase "columnar void" means a void in which a circumscribed rectangle for which the (length in the membrane thickness direction) / (length in the circumference (width) direction) of the void extending in the membrane thickness direction is five or more in an electron micrograph in which the hollow fiber membrane was frozen and cut in the direction perpendicular to the longitudinal direction of the fiber and the cross-sectional structure was observed.

When the width of the inner columnar void layer in the membrane cross-section is within the above-described preferred range, it is presumed that the size of the inner surface pore of the membrane is suitable for forming the active separation layer.

It is necessary that the inner columnar void layer have a thickness of 1% to 25% with respect to the membrane thickness of the substrate membrane, and more preferably a thickness of 3% to 15%. If the thickness of the inner columnar void layer is excessively small, a large sponge layer may occur inside the membrane, which may lead to a decrease in the forward osmosis membrane water permeability F2. When the inner columnar void layer is excessively large, the strength of the membrane decreases, and the yield tends to decrease when the membrane module is molded.

<Outer Columnar Void Layer>

In the present embodiment, the phrase "outer columnar void layer" refers to a columnar void layer extending from the outer surface of the substrate membrane toward the central portion thereof. It is preferable that the outer columnar void layer be present at a thickness of 25% or more and 70% or less with respect to the membrane thickness of the substrate membrane. When the thickness is within this range, diffusion of the solute and the solvent of the driving liquid in the substrate membrane is promoted, whereby the water permeability performance of the forward osmosis membrane can be sufficiently exhibited. The thickness of the outer columnar void layer is preferably 40% to 60%. If the thickness of the outer columnar void layer is excessively small, the diffusion of the solute and the solvent of the driving liquid during operation is restricted, and the water permeability performance of the forward osmosis membrane tends to be small. When the thickness of the outer columnar void layer is excessively large or when the membrane outer side is constituted by a large void portion, such as a finger-like void layer, the strength of the membrane decreases, and additionally, the potting resin at the time of molding the module may penetrate to the hollow portion of the membrane, whereby the yield of the module molding tends to decrease.

<Finger-Like Void Layer>

In the composite forward osmosis membrane of the present embodiment, it is preferable that a finger-like void layer be further present between the outer columnar void layer and the inner columnar void layer at a thickness of 10% to 50% with respect to a membrane thickness of the substrate membrane. As used herein, the phrase "finger-like void" refers to a void in which the void length is 10 $\mu$m or more in the membrane cross-section, the (membrane thickness direction length) / (circumferential (width) direction length) of a rectangle circumscribed on the void portion extending in the membrane thickness direction is less than five. In an electron micrograph obtained by taking a cross-sectional structure obtained by freezing and cutting a hollow fiber, a thickness of 10 $\mu$m in the membrane thickness direction is observed, and when 90% or more of the area is a columnar void portion or a finger-like void layer, a portion thereof is defined as a columnar void layer or (a part of) a finger-like void layer.

Although the present invention can be achieved even without a finger-like void layer, due to the presence of a finger-like void layer, the solute diffusivity of the substrate membrane becomes suitable and the internal concentration polarization is more easily reduced.

<Water Permeate Flux F1 of Substrate Membrane>

When the high water permeability of the substrate membrane and the high dextran rejection ratio are compatible with each other, it is presumed that the substrate membrane is smaller and has more pores (i.e., the porosity of the surface is high). It is expected that the water permeability performance and the dextran rejection ratio within a suitable range as well as the properties of the substrate membrane having a cross-sectional structure will diffuse the solute suitably in an environment suitable for the membrane surface to form an active separation layer and when the substrate membrane is used as a forward osmosis membrane to provide high forward osmosis membrane performance.

The water permeate flux F1 is preferably 1050 (kg/(m$^2$ $\times$ hr)) to 5000 (kg/(m$^2$ $\times$ hr)). From the viewpoint of maintaining the rejection ratio R of the substrate membrane within a range of 50% to 85%, the water permeate flux F1 of the substrate membrane is preferably 1300 (kg/(m$^2$ $\times$ hr)) to 4500 (kg/(m$^2$ $\times$ hr)), more preferably 1800 (kg/(m$^2$ $\times$ hr)) to 4000 (kg/(m$^2$ $\times$ hr)), and further preferably 2000 (kg/(m$^2$ $\times$ hr)) to 3200 (kg/(m$^2$ $\times$ hr)).

In the production of the substrate membrane of the present embodiment, for example, when the ratio of the polysulfone-based polymer terminal-modified with a hydroxy group is increased, the water permeate flux F1 of the substrate membrane tends to increase. Conversely, when the concentration of the polymer in the spinning dope solution is increased, since a dense membrane is formed, the water permeate flux F1 may decrease.

<Rejection Ratio R of Substrate Membrane>

The rejection ratio R of dextran T200 is 50% to 85%, and more preferably 60% to 75%.

If the rejection ratio is excessively large, the water permeability performance F2 of the forward osmosis membrane may be reduced. If the rejection ratio is excessively small, the back-diffusion of salt RSF of the forward osmosis membrane may become large.

In the production of the substrate membrane of the present embodiment, in the case in which the spinning dope solution is composed of a mixture of a polysulfone-based polymer and a polysulfone-based polymer having a terminal modified with either an amino group, a carboxy group, a hydroxy group, or a nitro group, for example, when the polymer concentration in the spinning dope solution is increased, a dense membrane is obtained, and thus, the rejection ratio R often increases.

<Compressive Strength of Substrate Membrane>

The substrate membrane support layer in the composite forward osmosis membrane of the present embodiment has a specific compressive strength in order to ensure the strength required as a support layer and to make the active separation layer on the substrate membrane support layer unlikely to peel. The compressive strength of the substrate membrane support layer is 0.25 MPa to 0.90 MPa, preferably 0.30 MPa to 0.60 MPa, more preferably 0.35 MPa to 0.55 MPa, and from the viewpoint of both strength and high F2, is further preferably 0.40 MPa to 0.50 MPa.

Though the principle has not been clarified, it is presumed that when the substrate membrane support layer has a compressive strength within the above range, the interior of the layer of the substrate membrane support layer has suitable voids, whereby the active separation layer is easily formed on the substrate membrane support layer, and the active separation layer is unlikely to peel.

When the polymer concentration at the time of membrane formation is increased and the membrane thickness is further increased, the compressive strength can be increased. Conversely, when the compressive strength is excessively high, the membrane cross-sectional structure is often dense, and the aforementioned amount of impregnation of the chemical solution, the diffusion rate to the surface of the membrane, and the like are often reduced. As a result, the water permeability of the forward osmosis membrane tends to decrease.

The method for measuring the compressive strength will be described later.

Note that a hollow fiber substrate membrane obtained by breaking down the active separation layer may be used for the above measurement test to determine P1.

<Membrane Module>

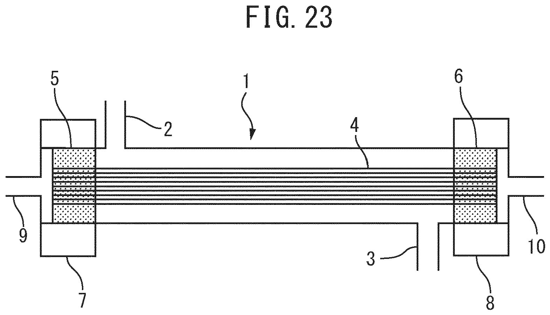

The composite forward osmosis membrane of the present embodiment can be used as a membrane module having a fiber bundle composed of a plurality of hollow fibers as shown in FIG. 23.

The composite forward osmosis membrane module (1) has a structure in which a hollow fiber bundle composed of a plurality of hollow fiber composite forward osmosis membranes (4) is filled in a cylindrical body, and both ends of the hollow fiber bundle are affixed to the cylinder body with an adhesive fixation part (5, 6). The cylindrical body has a shell side conduit (2, 3) on its side and is sealed by headers (7, 8). The adhesive fixation parts (5, 6) at both ends are solidified so as not to occlude the holes in the hollow portion of the hollow-fiber forward osmosis membrane.

The headers (7, 8) at both ends each have two core side conduits (9, 10) which communicate with the interior (hollow part) of the hollow-fiber composite forward osmosis membrane (4) and do not communicate with the outside. Due to these conduits, liquid can be introduced into the interior of the hollow-fiber composite forward osmosis membrane (4) or liquid can be drawn out from the interior.

The two shell-side conduits (2, 3) each communicate with the outside of the hollow-fiber composite forward osmosis membrane (4) and not with the interior. Due to these conduits, liquid can be introduced outside the hollow-fiber composite forward osmosis membrane (4) or liquid can be drawn out from the outside.

<Detachment Pressure of Composite Forward osmosis membrane>

Since the composite forward osmosis membrane is composed of a substrate membrane support layer and an active separation layer, it is important that the substrate membrane support layer and the active separation layer come into close contact with each other and do not peel. The detachment pressure is referred to herein as P2. P2 is preferably 20 kPa or more from the viewpoint of long-term operation, and is more preferably 25 kPa or more. When the detachment pressure is excessively small, the back-diffusion of salt tends to be large. When the detachment pressure is within a suitable range, the membrane does not detachment even when the forward osmosis membrane is operated for long period of times, and suitable performance can be maintained. The method for measuring the detachment pressure will be described later. Note that the forward osmosis membrane module used for measuring P2 has a defect as a forward osmosis membrane module. The module is disassembled and, after breaking down the active separation layer by an aqueous sodium hypochlorite solution to be described later, the module can be used for measurement of the water permeability F1 and the dextran rejection ratio R of the substrate membrane.

Hereinafter, the method for manufacturing the composite forward osmosis membrane of the present embodiment will be described.

<Production of Hollow-Fiber Substrate Membrane Support Layer>

The substrate membrane support layer is appropriately selected depending on the substrate membrane support layer in the desired composite forward osmosis membrane. Thus, the substrate membrane support layer prepared in this step includes a polysulfone-based polymer or one or more types of polymers selected from the group consisting of a polysulfone having a terminal modified with a hydroxy group, a polyether sulfone, a polyacrylonitrile, and a polyvinylpyrrolidone, wherein these polymers have a hydroxy group.

First, a raw material polymer constituting the substrate membrane support layer is dissolved in a suitable organic solvent to prepare a spinning dope solution. At this time, for example, after stirring for 24 hours or more, defoaming under reduced pressure may be carried out. The mass ratio of the raw material polymer in the spinning dope solution is preferably 15 to 45% by mass, and more preferably 17 to 25% by mass, from the viewpoint of ensuring continuous membrane formation property.

The organic solvent of the spinning dope solution is preferably an amide-based solvent, and for example, a solvent containing one or more types selected from N-methyl-2-pyrrolidone, N,N-dimethylacetamide, and N,N-dimethylformamide can be used. Additionally, ethylene glycols such as glycerin, triethylene glycol, tetraethylene glycol, or polyethylene glycol may be added as additives. The mass fraction of the additive is preferably 0 to 40%, more preferably 15 to 35%, and further preferably 20 to 30%. If the amount of the additive is excessively large, the void layer and the finger-like void layer do not grow, and the water permeability performance F2 of the forward osmosis membrane tends to be low.

The spinning dope solution is then heated to an appropriate temperature (e.g., 30 to 70 °C) and spun using a wet hollow spinning machine equipped with a double spinning port. Specifically, the spinning dope solution is put into the spinning machine, and fibers spun at a temperature equal to or higher than room temperature and equal to or lower than the boiling point of the solvent are extruded into a coagulation bath filled with a coagulation liquid adjusted to 30 °C to 70 °C to form hollow fibers by phase separation. At this time, the air gap is set to 200 to 400 mm, and the obtained hollow fibers may be wound on a winding machine and cut to predetermined lengths.

The spinning dope solution is passed through the outside of the double spinning port so that the substrate membrane support layer obtained by spinning becomes a hollow fiber shape, and a bore fluid can be passed through the interior thereof.

The temperature of the spinning dope solution is more preferably 40 °C to 60 °C. If the temperature of the dope solution is excessively low, it is presumed that the liquid viscosity increases and a suitable membrane structure is unlikely to be obtained. When the temperature of the spinning dope solution is excessively high, the liquid viscosity decreases, and it becomes difficult to spin at a predetermined membrane thickness.

As the bore fluid, for example, an aqueous solution containing water as a primary component and containing one or more types selected from alcohols, ethylene glycols, and amide-based solvents can be used. Examples of the alcohol include methanol, ethanol, and isopropyl alcohol. Examples of the ethylene glycols include triethylene glycol, tetraethylene glycol, and glycerin. Examples of the amide-based solvent include N-methyl-2-pyrrolidone, N,N-dimethylacetamide, and N,N-dimethylformamide. By adding an additive to the bore fluid, solidification becomes slow, whereby the thickness of the inner columnar void layer tends to increase. Conversely, if additives are excessively added, the pore diameter of the inner surface becomes large, whereby it may be difficult to coat the active separation layer.

The temperature of the coagulation bath is more preferably 40 °C to 65 °C, and further preferably 45 °C tot 60 °C. When the temperature of the coagulation bath is high, the substrate membrane water permeability F1, and thus, the water permeability F2, of the forward osmosis membrane tend to be high. Conversely, when the coagulation bath temperature exceeds 65 °C, the substrate membrane water permeability F1 becomes large, but since the dextran rejection ratio R tends to be small, defects may occur during the chemical solution passing in the subsequent active separation layer coating step, and the back-diffusion of salt may increase.

The coagulation liquid satisfying the coagulation bath contains water as a primary component, and may contain an alcohol, an ethylene glycol, and an amide-based solvent. The amount of the alcohol, the ethylene glycol, and the amide-based solvent to be added is preferably 40% by mass or less, more preferably 30% by mass or less, and further preferably 15% by mass or less. When the amount of the additive is excessive, coagulation outside the substrate membrane may be delayed, and the widths of the outer columnar voids may become excessively large. Further, the membrane shape becomes uneven, and membrane formation may not be possible in some cases.

In the production of the substrate membrane of the present embodiment, in the case in which the spinning dope solution is composed of a mixture of a polysulfone-based polymer and a polysulfone-based polymer having a terminal modified with either an amino group, a carboxy group, a hydroxy group, or a nitro group, for example, when the ratio of the polysulfone-based polymer terminal-modified with a hydroxy group is increased, the hydrophilicity is improved, and both the width and the thickness of the inner columnar void layer tend to be small. Further, if the polymer concentration in the spinningdope solution is increased, the width of the inner columnar void layer is often reduced. Conversely, when the polymer concentration in the spinning dope solution is increased, the thickness of the inner columnar void layer is often increased.

By changing the liquid composition of the spinning internal liquid, the thickness of the inner columnar void layer can be changed. For example, by using an aqueous solution to which glycerin or ethylene glycol has been added as a bore fluid, coagulation is delayed, and the thickness of the inner columnar void layer tends to increase. Conversely, when the amount of additives in the internal liquid is excessive, a finger-like void layer may develop instead of the inner columnar void layer. Though the reason is not clear, when the amount of the additive in the internal liquid is excessive, in many cases, the back-diffusion of salt RSF becomes large.

In the production of the substrate membrane of the present embodiment, in the case in which the spinning dope solution is composed of a mixture of a polysulfone-based polymer and a polysulfone-based polymer having a terminal modified with either an amino group, a carboxy group, a hydroxy group, or a nitro group, for example, when the ratio of the polysulfone-based polymer terminal-modified with a hydroxy group is increased, the thickness of the outer columnar void layer tends to increase.

The spinning dope solution in which the concentration fluctuation occurs in the air gap undergoes solid-liquid phase separation in full scale when entering the coagulation bath and solidifies. Humidity and temperature at an empty running portion also greatly affect the structure of the outer columnar void layer. By covering the empty running portion with a chimney and maintaining a high temperature and high humidity state, an outer columnar void can be obtained in a suitable range.

If the amount of the additive in the spinning dope solution is excessively high, a void-free membrane tends to be obtained, and thus, the amount of the additive is preferably 45% by mass or less, and more preferably 35% by mass or less. Conversely, when an additive is included to some extent, the thickness of the outer columnar void layer tends to increase.

<Production of Substrate Membrane Module>

Approximately 1500 to 2000 hollow fibers are filled into a cylindrical or square tubular plastic housing, and both ends are solidified with an adhesive resin such as an epoxy to produce a membrane module as shown in FIG. 23 with an effective inner surface area of 1.5 m$^2$ to 1.8 m$^2$. Note that the effective membrane inner surface area of the forward osmosis membrane module may be considered to be the same as the effective membrane inner surface area of the substrate membrane module.

<Application (Coating) of Active Separation Layer >

The pressure inside the hollow fiber of the membrane module in which the first monomer solution is filled inside the hollow fiber membrane is set so that the inner pressure is greater than the outer pressure. At this time, the extra first monomer solution inside the hollow fiber enters into the micropores due to the pressure difference (in some cases, it soaks into the outer surface side), and a thin liquid phase having a uniform thickness is formed inside the hollow fiber. Next, the second monomer solution is fed to the inside of the hollow fiber with a pump and contacted with the liquid phase of the first monomer solution. Due to this contact, interfacial polymerization occurs between the first monomer and the second monomer, and an active separation layer composed of a thin polymer membrane is formed inside the microporous hollow fiber membrane.
When the interfacial polymerization is carried out in this manner, it is preferable to maintain a pressure difference between the core side and the shell side set in advance.
A thin polymer membrane is formed in this manner inside the microporous hollow membrane by interfacial polymerization of the first monomer and the second monomer to produce the composite hollow fiber membrane module of the present embodiment.
Since the interfacial polymerization proceeds at the interface between the first monomer solution and the second monomer solution, the surface of the form polymer layer has a fine ridge and valley structure.
The types and combination of the first monomer and the second monomer, and the type of the solvent to be used (which is described later) may be any type as long as both monomers immediately undergo a polymerization reaction at the interface thereof to form a polymer thin membrane, and otherwise, there is no particular limitation. It is preferably from the viewpoint of membrane strength and the back-diffusion of salt that at least one of the first monomer and the second monomer contain a reactive compound having three or more reactive groups, since a thin film made of a three-dimensional polymer is formed.
Examples of the polymer in a polymer thin membrane preferably include polycondensation products of at least one or more first monomers selected from polyfunctional amines and at least one or more second monomers selected from the group consisting of a polyfunctional acid halide and a polyfunctional isocyanate. More specifically, the polymer is selected from a polyamide obtained by an interfacial polycondensation reaction of a polyfunctional amine and a polyfunctional acid halide and a polyurea obtained by an interfacial polymerization reaction of a polyfunctional amine and a polyfunctional isocyanate. When these polymer thin membranes are used as the active separation layer, the separation performance refers to the performance of separating pure water and solutes such as ions dissolved therein.
The polyfunctional amine is an aromatic or aliphatic amino compound having two or more amino groups in the molecule. Specific examples of the polyfunctional aromatic amine include m-phenylenediamine, p-phenylenediamine, 3,3'-diaminodiphenylmethane, 4,4'-diaminodiphenylamine, 4,4'-diaminodiphenylether, 3,4'-diaminodiphenylether, 3,3'-diaminodiphenylamine, 3,5'-diaminobenzoic acid, 4,4'-diaminodiphenylsulfone, 3,3'-diaminodiphenylsulfone, 1,3,5-triaminobenzene, 1,5-diaminonaphthalene, and these may be used alone or in a mixture thereof. In the present invention, in particular, one or more types selected from m-phenylenediamine and p-phenylenediamine are suitably used.
Specific examples of polyfunctional aliphatic amines include primary amines having a cyclohexane ring, such as 1,3-diaminocyclohexane, 1,4-diaminocyclohexane, 4,4'-bis(paraaminocyclohexyl)methane, 1,3-bis(aminomethyl)cyclohexane, 1,4-bis(aminomethyl)cyclohexane, and 1,3,5-triaminocyclohexane,
secondary amines having a piperazine ring, such as piperazine, 2-methylpiperazine, ethylpiperazine, and 2,5-dimethylpiperazine,
secondary amines with a piperidine ring, such as 1,3-bis(4-piperidyl)methane, 1,3-bis(4-piperidyl)propane, and 4,4'-bipiperidine;
others such as amines having both primary and secondary amino groups, such as 4-(aminomethyl)piperidine; and ethylenediamine, propylenediamine, 1,2-propanediamine, 1,2-diamino-2-methylpropane, 2,2-dimethyl-1,3-propane, tris(2-aminoethyl)amine, N,N'-dimethylethylenediamine, and N,N'-dimethylpropanediamine, and these can be used alone or as a mixture thereof. Mixtures of these polyfunctional aliphatic amines and the polyfunctional aromatic amines described above can also be used.

Examples of polyfunctional acid halides include polyfunctional aromatic acid halides and polyfunctional aliphatic acid halides.

The polyfunctional aromatic acid halide is an aromatic acid halide compound having two or more acid halide groups in one molecule. Examples thereof include trimesic acid halide, trimellitic acid halide, isophthalic acid halide, terephthalic acid halide, pyromellitic acid halide, benzophenontetracarboxylic acid halide, biphenyldicarboxylic acid halide, and benzene disulfonic acid halide, and these can be used alone or as a mixture thereof.

The polyfunctional aliphatic acid halide is an aliphatic acid halide compound having two or more acid halide groups in one molecule. Examples thereof include not only compounds such as alicyclic polyfunctional acid halides including cyclobutane dicarboxylic acid halides, cyclopentane dicarboxylic acid halides, cyclopentane tricarboxylic acid halide, cyclopentane tetra acid halides, cyclohexane dicarboxylic acid halides, and cyclohexane tricarboxylic acid halides; but also, propane tricarboxylic acid halide, butane tricarboxylic acid halides, pentane tricarboxylic acid halides, succinic acid halides, and glutaric acid halides. These may be used alone or in mixtures thereof, and mixtures of these polyfunctional aliphatic acid halides and the polyfunctional aromatic acid halides described above may be used.

Examples of the polyfunctional isocyanate include ethylene diisocyanate, propylene diisocyanate, benzene diisocyanate, toluene diisocyanate, naphthalene diisocyanate, and methylene bis (4-phenylisocyanate).

EXAMPLES

The present invention will be specifically described below based on the Examples and Comparative Examples, but the present invention is not limited by the Examples.

It was confirmed how the performance of the composite forward osmosis membrane varied in accordance with the water permeate flux F1, the rejection factor R, and the cross-sectional structure of the substrate membrane.

[Example 1]

[Preparation of Hollow-Fiber Substrate Membrane]

A polyether sulfone (product name Ultrason E2020P manufactured by BASF Co., Ltd.) and a polyether sulfone having a hydroxylated terminal (product name Ultrason E2020PSR) were dissolved in a N-methyl-2-pyrrolidone (manufactured by Wako Pure Chemical Industries, Ltd.) to prepare a hollow fiber spinning dope solution. At this time, the polyether sulfone was adjusted so that the terminal molar ratio of the polyether sulfone and the polyether sulfone having a hydroxylated terminal was 50:50. A wet hollow spinning machine equipped with a double spinning port was filled with the above dope solution, and extruded into a coagulation tank filled with water at 50 °C to form hollow fibers by phase separation. In this case, an aqueous solution of 50% by mass of tetraethylene glycol was used as the spinningbore fluid. The obtained hollow fibers were wound on a winding machine. The obtained hollow fibers had an outer diameter of 1.0 mm and an inner diameter of 0.70 mm.

[Measurement of Water Permeate Flux F1 of Substrate Membrane]

A 0.70 mm needle was connected to the end of the piping of a device containing approximately 2 L of pure water in a pressurized tank. The needle was passed through a hollow fiber substrate membrane cut to a length of 10 cm and having one end sealed, pure water at 25 °C was passed through the hollow portion of the fiber at a pressure of 100 kPa for 3 minutes, and the filtrate amount was measured. The water permeate flux F1 was determined by the above formula (1). F1 was 1810 $(kg/(m^2 \times hr))$.

[Determination of Rejection Ratio R of Substrate Membrane]

A 0.10% by mass aqueous solution of dextran T200 (Lot. 31083 manufactured by SERVA Co., Ltd.) was passed at a linear velocity of 100 cm/sec to achieve a back pressure of 30 kPa. At this time, the liquid temperature was adjusted to 25 °C. The filtrate for 3 minutes was weighed from 1 minute to 4 minutes after the start of the liquid passing, and the dextran concentration r1 (ppm) in the filtrate = the dextran concentration (ppm) before the liquid passing and the dextran concentration r2 (ppm) in the mother solution were calculated with a TOC meter, and the rejection ratio R was determined by the above formula (2). Measurements were carried out in duplicate, and the mean value of R was used. R was 71%.

[Acquisition and Analysis of Cross-Sectional SEM Image]

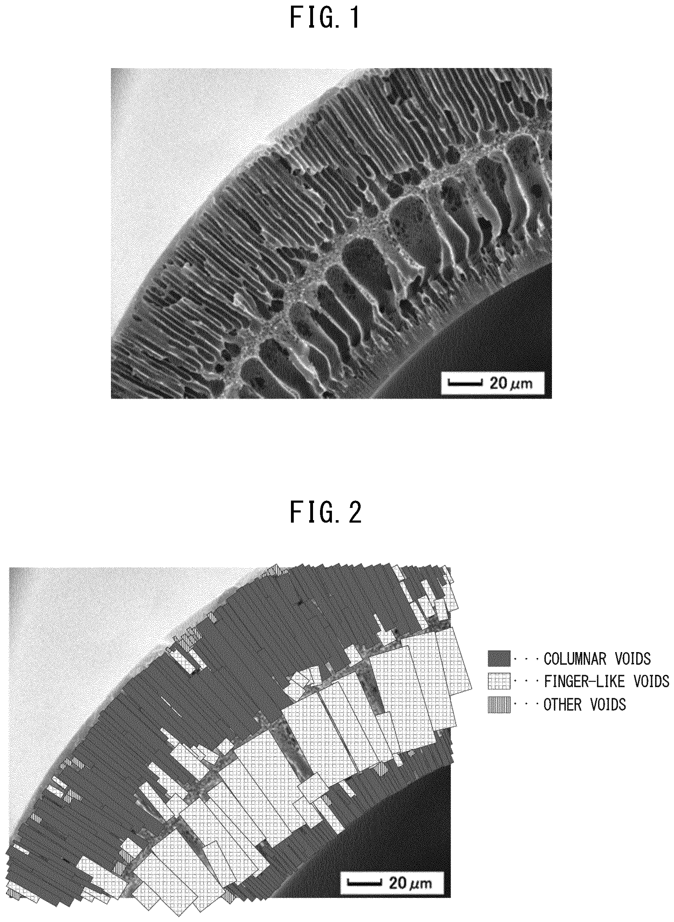

Several hollow fiber substrate membranes were cut to lengths of 7 cm and wrapped with wet Kimwipes. The substrate membranes wrapped with the above-mentioned Kimwipes were placed into a container made of SUS cooled to -72 °C, and the substrate membranes were frozen. The frozen substrate membranes were cut so that a cross-section perpendicular to the longitudinal direction became the cross-section, and the cut substrate membranes were heated to room temperature and air-dried. They were then subjected to Pd-Pt sputtering, and the cross-sectional structure was observed by electron microscopy. The cross-sectional SEM images were as shown in FIGS. 1 and 2.

[Preparation of Substrate Membrane Module]

1750 hollow fiber substrate membranes were filled into a cylindrical plastic housing a having a diameter of 5 cm and a length 50 cm to produce a membrane module with an effective membrane inner surface area of 1.7 m$^2$, as shown in FIG. 23. The fiber end surface of the module was confirmed not to be occluded with resin.

[Application of Active Separation Layer]

A 2.0% by mass aqueous solution of m-phenylenediamine was passed through the inner surface side of the above membrane module for 30 minutes. Excess amine was removed by flowing air at a flow rate of 100 L/min for 10 minutes while the substrate membrane module shell portion was maintained at a reduced pressure of 90 kPaG. Thereafter, an active separation layer was applied to the inner surface of the hollow fiber by passing a hexane solution of 1,3,5-trimesic acid chloride for 5 minutes at a flow rate of 3 L/min. Finally, excess acid chloride was removed by flowing nitrogen gas, and the module was washed with water for more than 30 minutes to obtain a forward osmosis membrane module.

[Measurement of Water Permeability Performance and Back-Diffusion of Salt of Forward Osmosis Membrane Module]

A 50 L tank containing 30 L of pure water was connected by a pipe to the core side conduit of the forward osmosis membrane module obtained in each of the following Examples and Comparative Examples, and pure water was circulated with a pump. The tank was equipped with a conductivity meter to measure the transfer of salt to the pure water. A 50 L tank containing 20 L of saline at a concentration of 3.5% by mass was connected to the shell side conduit by a pipe, and saline was circulated with a pump. The tanks on the core and shell sides were placed on a balance, and the amount of water movement was measured. The flow rate of pure water was 2.2 L/min, and the shell-side flow rate was 8.8 L/min at the same time, the transfer amount of water and salt was measured, and the water permeate flux F2 and back-diffusion of salt RSF of the forward osmosis membrane were determined by the above formulas (4) and (5), respectively. F2 was 13.2 (kg/(m$^2$ × hr)) and RSF was 1.40 (g/ (m$^2$ × hr)).

[Examples 2 to 8 and Comparative Examples 1 to 3]

In Examples 2 to 8 and Comparative Examples 1 to 3, a membrane module was prepared by changing the production conditions as shown in Table 1 below, and F2 and RSF were measured for the obtained membrane modules. The results are shown in Table 1 below. Note that in Comparative Example 2, a mixture of a sulfonated polyether sulfone and a polyether sulfone was used as the raw material according to the production method described in Patent Literature 1.

In Table 1, abbreviations in the solvent or additive column have the following meanings.

NMP: N-methyl-2-pyrrolidone
TEG:tetraethylene glycol

[Table 1]

| No | Polymer (Poly-ether Sulfone) Constituting Base Membrane | Production Conditions | | | | | Substrate Membrane | | | | | | Performance | | Forward Osmosis Membrane Performance | |
|---|---|---|---|---|---|---|---|---|---|---|---|---|---|---|---|---|
| | | Ratio of Terminal Polar Functional Groups (%) | Polymer (mass%) | Solvent (mass%) | Additives (mass%) | Coagulation Bath Temp | Dimensions | | Inside Columnar Void Layer | | Outside Columnar Void Layer | Finger-shaped Void Layer | | | | |
| | | | | | | | Inner Diameter (mm) | Outer Diameter (mm) | Width (μm) | Thickness (%) | Thickness (%) | Present/ Absent | F1 (kg/(m²×hr)) | R (%) | F2 (kg/(m²×hr)) | RSF(g/(m²×hr)) |
| Ex 1 | E2020P/E2020P SR | 50 | 20 | NMP, 80 | 0 | 50 | 0.7 | 1 | 2.2 | 13 | 42 | Present | 1810 | 71 | 13.2 | 1.4 |
| Ex 2 | E2020P/E2020P SR | 50 | 18 | NMP, 82 | 0 | 50 | 0.7 | 1 | 2.2 | 13 | 42 | Present | 2777 | 61 | 12.2 | 0.69 |
| Ex 3 | E2020P/E2020P SR | 50 | 17 | NMP, 83 | 0 | 50 | 0.7 | 1 | 2.1 | 10 | 51 | Present | 3019 | 63 | 13.2 | 1.61 |
| Ex 4 | E2020P/E2020P SR | 50 | 19 | NMP, 81 | 0 | 50 | 0.7 | 1 | 2.7 | 8 | 46 | Present | 1412 | 81 | 11.8 | 1.87 |
| Ex 5 | E2020P/E2020P SR | 70 | 20 | NMP, 80 | 0 | 50 | 0.7 | 1 | 2.4 | 15 | 45 | Present | 2066 | 69 | 12.2 | 1.2 |
| Ex 6 | E2020P/E2020P SR | 20 | 20 | NMP, 80 | 0 | 50 | 0.7 | 1 | 2.1 | 12 | 53 | Present | 1103 | 58 | 11.9 | 1.76 |
| Ex 7 | E2020P/E2020P SR | 90 | 18 | NMP, 57 | TEG, 25 | 60 | 0.7 | 1 | 1.7 | 17 | 41 | Present | 2686 | 73 | 14.4 | 1.86 |
| Ex 8 | E2020PSR | 94 | 18 | NMP, 57 | TEG, 25 | 50 | 0.7 | 1 | 1.5 | 14 | 42 | Present | 1998 | 74 | 12.3 | 1.45 |
| Comp Ex1 | E2020P/E2020P SR | 10 | 20 | NMP, 80 | 0 | 50 | 0.7 | 1 | 2 | 27 | 33 | Present | 1252 | 80 | 10.5 | 1.73 |
| Comp Ex2 | PSf/Sulfonated PSf | 10 (Sulfonated PES) | 20 (=18+2) | NMP, 80 | 0 | 60 | 0.7 | 1 | 1.5 | 6.9 | 8.2 | Present | 1981 | 48 | 9.7 | 7.38 |

| No | Production Conditions | | | | | | Substrate Membrane | | | | | | | | Forward Osmosis Membrane Performance | |
| | Polymer (Polyether Sulfone) Constituting Base Membrane | Ratio of Terminal Polar Functional Groups (%) | Polymer (mass%) | Solvent (mass%) | Additives (mass%) | Coagulation Bath Temp | Dimensions | | Inside Columnar Void Layer | | Outside Columnar Void Layer | Finger-shaped Void Layer | Performance | | | | |
| | | | | | | | Inner Diameter (mm) | Outer Diameter (mm) | Width ($\mu$m) | Thickness (%) | Thickness (%) | Present/ Absent | F1 (kg/ (m$^2\times$hr)) | R (%) | F2 (kg/ (m$^2\times$hr)) | RSF(g/ (m$^2\times$hr)) |
| Comp Ex3 | E6020 | 0 | 20 | NMP, 80 | 0 | 50 | 0.7 | 1 | 3.2 | 38 | N/A | Absent | 1008 | 91 | 11.1 | 1.01 |

EP 3 854 472 A1

Subsequently, as described below, confirmation of the compressive strength P1 of the substrate membrane, the detachment pressure P2 of the composite forward osmosis membrane, and long-term operability was carried out.

[Example 9]

A hollow fiber substrate membrane and a forward osmosis membrane were prepared in the same manner as in Example 8.

[Measurement of Compressive Strength of Substrate Membrane]

A hollow fiber cut to a length of 11 cm was immersed in a pressurized container filled with pure water at 40 °C. One end of the hollow fiber was sealed and the other end was connected via a syringe needle to a nozzle leading out of the container. The pressurized container was sealed and water pressure was applied. When the pressure was maintained at 0.10 MPa for 5 minutes, the amount of water W(g) transmitted through the core side (inside the hollow fiber) was measured, and the water permeate flux F3 (g/min) was calculated according to the above formula (3). The above operation was repeated while increasing the pressure by 0.05 MPa, and the point where the water permeate flux F3 began to decrease was recorded. The above measurement was carried out twice, and the average value was used as the compressive strength P1. P1 was 0.40 (MPa).

[Measurement of Detachment Pressure]

Under the same conditions as the measurement of F2, the composite forward osmosis membrane module was operated for 10 minutes, and the water permeate flux and the back-diffusion of salt were measured. Then, a back-pressure valve on the module outlet side of the driving liquid was adjusted to increase the modular input pressure of the driving liquid to increase ΔP by 5 kPa, and the composite forward osmosis membrane module was operated for 10 minutes to measure the water permeate flux F2 and the back-diffusion of salt RSF. This procedure was repeated to determine the water permeate flux F2 and the back-diffusion of salt RSF of the composite forward osmosis membrane module while increasing ΔP by sequentially increasing the modular pressure $P_D$ of the driving liquid.
The detachment pressure P2 was defined as ΔP when the ratio RSF/F1 of the back-diffusion of salt RSF to the water permeate flux F2 exceeded 1.5 times that when ΔP = 0 kPa.

$$\Delta P = (\text{module pressure of the drive fluid}) - (\text{modular pressure of the fluid to be processed}).$$

When the detachment pressure P2 of the above forward osmosis membrane was determined, P2 = 40(kPa).

[Confirmation of Long-Term Operability]

A forward osmosis membrane module was produced again under the same conditions, and F2 and RSF were measured.
Next, for this composite forward osmosis membrane module, pure water and 3.5% by mass of saline were used as the liquid to be treated and the driving liquid, respectively. The module was operated for 24 hours at a liquid temperature of 25 °C while the water to be treated and the driving liquid were fed to the core side and the shell side, respectively, and the water permeate flux F1 and the back-diffusion of salt RSF were measured.
At this time, the ΔP between the module-loaded pressure $P_D$ of the driving liquid and the module-loaded pressure $P_S$ of the physical solution to be processed was adjusted to 5 kPa or less. Further, a saturated aqueous solution of sodium chloride was added to the driving liquid storage tank as appropriate so that the conductivity ε mS/cm (D) of the driving liquid in the driving liquid storage tank became 50 mS/cm to 60 mS/cm.
After 24 hours of operation, the composite forward osmosis membrane module was removed from the device and washed with pure water.
Thereafter, the composite forward osmosis membrane module was connected again to the device, and the ΔP was adjusted to 10 kPa by increasing the modular pressure $P_D$ of the driving liquid, and the operation was carried out again for 24 hours, and the water permeate flux F1 and the back-diffusion of salt RSF were measured.
Thereafter, the composite forward osmosis membrane module was washed with pure water by the same method as described above.
This procedure consisting of 24 hours operation and washing with pure water was repeated until the value of the specific ratio RSF/F1 of the back-diffusion of salt RSF to the water permeate flux F1 was more than 1.5 times as compared with the initial value.

Then, the time until the value of the ratio RSF/F1 exceeded 1.5 times the initial value was recorded as the performance degradation time T (h), and evaluated by the following criteria.

Grade AA (sufficiently high durability):    T > 800,
Grade A (suitable durability):    $800 \geq T > 200$,
Grade C (poor durability):    $T \geq 200$.

The membrane module obtained in Example 9 had a grade of A.

[Examples 10 to 13 and Comparative Example 4]

In Examples 10 to 13 and Comparative Example 4, membrane modules were prepared by changing the production conditions as shown in Table 2 below, and the obtained membrane modules were subjected to confirmation of the compressive strength P1 of the substrate membrane, the detachment pressure P2 of the composite forward osmosis membrane, and long-term operability. The results are shown in Table 2 below.

In Table 2, abbreviations in the solvent or additive column have the following meanings.

NMP: N-methyl-2-pyrrolidone
DMAc: N-dimethylacetamide
TEG:tetraethylene glycol

[Table 2]

| No | Production Conditions | | | | | Membrane Dimensions | | | Substrate Membrane Performance | Forward Osmosis Membrane Performance | | | Long Term Operability |
| --- | --- | --- | --- | --- | --- | --- | --- | --- | --- | --- | --- | --- | --- |
| | Polymer (Polyether Sulfone) Constituting Base Membrane | Polymer (mass%) | Solvent (mass%) | Additives (mass%) | Coagulation Bath Temp | Inner Diameter (mm) | Outer Diameter (mm) | Inner/Outer Diameter Ratio | Compressive Strength P1 (MPa) | F2 (kg/ (m$^2$×hr)) | RSF(g/ (m$^2$×hr)) | Detachment Pressure P2 (kPa) | AA/A/C |
| Ex 9 | E2020PSR | 18 | NMP, 57 | TEG, 25 | 50 | 0.7 | 1 | 1.428571 | 0.4 | 12.3 | 1.45 | 40 | A |
| Ex 10 | 3600RP | 18 | NMP, 57 | TEG, 25 | 60 | 0.7 | 1 | 1.428571 | 0.55 | 14.1 | 1.78 | 50 | A |
| Ex 11 | 5003P | 18 | NMP, 37 | TEG, 45 | 50 | 0.9 | 1.38 | 1.533333 | 0.35 | 12.3 | 1.74 | 40 | AA |
| Ex 12 | 5003P | 18 | DMAc, 82 | 0 | 50 | 1.2 | 1.5 | 1.25 | 0.38 | 10.3 | 1.04 | 50 | AA |
| Ex 13 | E2020PSR | 18 | DMAc, 57 | TEG, 25 | 50 | 0.7 | 1 | 1.428571 | 0.43 | 12 | 1.86 | 50 | AA |
| Comp Ex4 | E6020 | 18 | NMP, 67 | TEG, 15 | 50 | 0.7 | 1 | 1.428571 | 0.6 | 3.4 | 0.66 | 15 | C |

[Reference Example 1]

[Breaking Down of Active Separation Layer]

The above forward osmosis membrane used in Example 1 was immersed in an aqueous solution composed of 2.0% by mass of sodium hypochlorite, 2.0% by mass of sodium hydroxide, and 0.15% by mass of calcium chloride for 200 hours at 60 °C. Thereafter, the fibers were thoroughly washed with pure water. The substrate membrane obtained by breaking down the separating active layer exhibited an F1 = 1768 (kg/(m$^2$ × hr)), and R = 73.5%. In other words, it discovered that measurement of the water permeate flux F1 and the rejection ratio R of the substrate membrane may be carried out on either the substrate membrane before the application of the active separation layer or on the substrate membrane obtained by breaking down the active separation layer of the forward osmosis membrane.

[Reference Example 2]

[Identification of Terminal Polar Functional Groups]

To determine whether the terminal groups of the polyethersulfonic E2020PSR were modified with hydroxyl groups, analysis was carried out using NMR as described below.

Forward osmosis membranes were dissolved in N,N-dimethylformamide-d7 (99.5 atom% D, catalogue No. 320730075 manufactured by ACROS Co., Ltd.), and insoluble fractions were removed to carry out 1H NMR measurement. Imidazole (Wako Special Class, Cat. No. 093-00011 manufactured by WAKO Co., Ltd.) was added to this solution, followed by tert-butyldimethylsilyl chloride (Cat. No. 190500 manufactured by ALDRICH Co., Ltd., 97% purity), and the hydroxy terminals contained in the polymer were silylated. After allowing to stand at room temperature for approximately 4 hours after adding the aforementioned reagent, 1H, 1H-13C HSQC, 1H-13C HMBC and 1H-1H NOESY were measured for this solution to identify the hydrogen at the ortho position of the phenyl group having the methoxy group terminal and the hydroxy group terminal in the polymer, and the presence molar ratio of the methoxy group terminals and the hydroxy terminals in the polymer were calculated from the integrated value of each peak. Chemical shifts were based on CH3 of N,N-dimethylformamide on the high-magnetic field side (2.74 ppm), and the singlet peak of the hydrogen of CH3 with a molar ratio of methoxy-group ends calculated at 3.8 to 4.0 ppm was used. The doublet peaks of the hydrogen at the ortho position of the phenyl group with a hydroxy terminus showing a peak shift from 7.00 to 7.15 ppm before chemical modification to 6.90 to 7.20 ppm after chemical modification were used for molar ratio calculations of the hydroxy group terminals. For both peaks, the abundance molar proportions were calculated by the area values of the tangential area between the valleys of the peaks. 1H NMR measurement was carried out with a 400 MHz NMR manufactured by Nippon Electronics Co., Ltd., and measurement of other NMR was carried out with a 600 MHz NMR and cryoprobe manufactured by Bruker Co., Ltd.

As a result, 94% of the terminals were found to be hydroxy groups.

[Measurement of Water Contact Angle of Hollow-Fiber Substrate Membrane Support Layer Constituent Material]

Polyether sulfone (Veradel 3600RP) was dissolved in N-methyl-2-pyrrolidone to obtain a solution having a polymer concentration of 20% by mass. This solution was applied onto a glass plate and immersed in a 50% by mass aqueous tetraethylene glycol solution at 60 °C to prepare a polymer flat membrane having a membrane thickness of 200 $\mu$m on the glass plate.

2 $\mu$L of pure water was dropped onto the surface of the obtained polymer flat membrane to form droplets of pure water on the surface of the polymer flat membrane. The value obtained by numerical evaluation of the angle formed between the surface of the polymer flat membrane and the liquid droplet by analysis of the projection image was used as the water contact angle. The water contact angle of this polymer flat membrane was 76.9°.

INDUSTRIAL APPLICABILITY

Since the forward osmosis membrane of the present invention has high water permeability performance and reduced back-diffusion of salt, it is suitably applicable for, for example, the concentration and dehydration of foods and chemical solutions, seawater desalination, brackish water desalination, the treatment of produced water discharged from gas fields represented by shale gas and oil fields, and the concentration and dilution of fertilizer solutions. In particular, when the forward osmosis membrane of the present invention is applied to the concentration of foods and chemical solutions, it is possible to concentrate the object to be concentrated at a high rate without heating, and also to suppress the outflow or inflow of solutes, whereby it is possible to perform non-heating concentration in which deterioration of components and contamination with foreign matter are prevented.

REFERENCE SIGNS LIST

1 hollow fiber membrane module
2 shell side conduit
3 shell side conduit
4 hollow fiber membrane
5 adhesive fixation part
6 adhesive fixation part
7 header
8 header
9 core side conduit
10 core side conduit

## Claims

1. A composite forward osmosis membrane composed of a hollow-fiber porous polymer substrate membrane, wherein an active separation layer is present on an inner surface or an outer surface of the substrate membrane, an inner columnar void layer having a width of 0.1 $\mu$m to 5.0 $\mu$m is present from the inner surface toward a central part of the substrate membrane at a thickness of 1% to 25% with respect to a membrane thickness of the substrate membrane, an outer columnar void layer is present from the outer surface toward the central part of the substrate membrane at a thickness of 25% to 70% with respect to the membrane thickness, and the substrate membrane simultaneously satisfies formulas (1) and (2) below:

$$1050 \leq F1 \leq 5000 \quad ...\text{formula (1)}$$

where F1 (kg/(m$^2$ $\times$ hr)) = L1 (kg) / (M (m$^2$) $\times$ H (hr)), F1 represents the water permeate flux of the substrate membrane, L1 is the amount of water which passes through to the outside of the substrate membrane when water is supplied to the inside of the substrate membrane at a pressure of 100 kPa, M is the inner surface area of the substrate membrane, and H is the measurement time, and

$$50 \leq R \leq 85 \quad ...\text{formula (2)}$$

where R (%) = {1 - (r1 (ppm) / r2 (ppm))} $\times$ 100, R is the rejection ratio of dextran T200 when a dextran T200 aqueous solution is passed through the inside of the substrate membrane at a linear velocity of 100 cm/sec and a back pressure of 30 kPa, r1 is the dextran concentration in the filtrate that has permeated to the outside of the substrate membrane, and r2 is the dextran concentration in a 0.10 mass% aqueous solution of dextran T200 before liquid passage.

2. The composite forward osmosis membrane according to claim 1, wherein the water permeate flux F1 is 1800 (kg/(m$^2$ $\times$ hr)) to 4000 (kg/(m$^2$ $\times$ hr)).

3. The composite forward osmosis membrane according to claim 2, wherein the water permeate flux F1 is 2000 (kg/(m$^2$ $\times$ hr)) to 3200 (kg/(m$^2$ $\times$ hr)).

4. The composite forward osmosis membrane according to any one of claims 1 to 3, wherein the rejection ratio R is 60% to 75%.

5. The composite forward osmosis membrane according to any one of claims 1 to 4, wherein the inner columnar void layer having a width of 0.5 $\mu$m to 3.0 $\mu$m is present from the inner surface to the central part of the hollow fiber membrane at a thickness of 3% to 15% with respect to the membrane thickness of the hollow fiber membrane, and the outer columnar void layer is present from the outer surface toward the central part of the hollow fiber membrane at a thickness of 40% to 60% of the membrane thickness.

**6.** The composite forward osmosis membrane according to any one of claims 1 to 5, wherein a finger-like void layer is further present between the outer columnar void layer and the inner columnar void layer at a thickness of 10% to 50% with respect to the membrane thickness of the substrate membrane.

**7.** The composite forward osmosis membrane according to any one of claims 1 to 6, wherein the substrate membrane is composed of a mixture of a polysulfone-based polymer and a polysulfone-based polymer having a terminal modified with any of an amino group, a carboxy group, a hydroxy group, or a nitro group.

**8.** The composite forward osmosis membrane according to claim 7, wherein the polysulfone-based polymer is polyether sulfone.

**9.** A composite forward osmosis membrane comprising a substrate membrane support layer, and an active separation layer laminated on the substrate membrane support layer, wherein
the substrate membrane support layer contains one or more polymers selected from the group consisting of polysulfone, polyether sulfone, polyacrylonitrile, and polyvinylpyrrolidone, and this polymer has a hydroxy group,
a membrane thickness of the substrate membrane support layer is 50 $\mu$m to 250 $\mu$m, and
a compressive strength of the substrate membrane support layer is 0.25 MPa to 0.90 MPa.

**10.** The composite forward osmosis membrane according to claim 9, wherein the polymer is polyether sulfone.

**11.** The composite forward osmosis membrane according to claim 9 or 10, wherein a detachment pressure of the composite forward osmosis membrane is 20 kPa to 200 kPa.

**12.** The composite forward osmosis membrane according to any one of claims 8 to 11, wherein the substrate membrane is composed of a mixture of a polyether sulfone and a polyether sulfone having a terminal modified with a hydroxy group, and the mixing ratio thereof is 80:20 to less than 1:99.

**13.** The composite forward osmosis membrane according to any one of claims 9 to 12, wherein the active separation layer contains one or more polymers selected from the group consisting of polyamide, polyurea, and polybenzimidazole.

**14.** The composite forward osmosis membrane according to claim 13, wherein the active separation layer further contains one or more additives selected from carbon nanotubes and graphene oxide.

**15.** The composite forward osmosis membrane according to any one of claims 9 to 14, wherein the composite forward osmosis membrane is a hollow-fiber composite forward osmosis membrane.

**16.** The composite forward osmosis membrane according to claim 15, wherein an inner diameter of the hollow-fiber composite forward osmosis membrane is 500 $\mu$m to 1,500 $\mu$m.

**17.** The composite forward osmosis membrane according to claim 15 or 16, wherein the ratio ($d_O/d_I$) of an inner diameter ($d_I$) to an outer diameter ($d_O$) of the hollow-fiber composite forward osmosis membrane is 1.10 to 1.60.

**18.** A composite forward osmosis membrane module, wherein a fiber bundle in which a plurality of the composite forward osmosis membrane according to any one of claims 1 to 17 are bundled is housed in a housing.

**19.** A method for the production of the composite forward osmosis membrane according to any one of claims 9 to 17, the method comprising:

a substrate membrane support layer preparation process for preparing a substrate membrane support layer, and an active separation layer formation process for forming an active separation layer on the substrate membrane support layer, wherein
the substrate membrane support layer to be prepared in the substrate membrane support layer preparation process contains one or more polymers selected from the group consisting of polysulfone, polyether sulfone, polyacrylonitrile, and polyvinylpyrrolidone, and the polymer has an OH group,
the active separation layer formation process has the following steps and is carried out by interfacial polymerization of a first monomer and a second monomer,
the active separation layer formation process comprising:

a first solution liquid membrane formation step for forming a liquid membrane of a first solution containing the first monomer on one side of the substrate membrane support layer,

a solution contact step for contacting the liquid membrane of the first solution with a second solution containing the second monomer, and

an active separation layer formation step for forming the active separation layer on the substrate membrane support layer by carrying interfacial polymerization while maintaining the contact between the liquid membrane of the first solution and the second solution.

20. The method according to claim 19, wherein

the active separation layer is composed of a polyamide,

the first solution is an aqueous solution containing a polyfunctional aromatic amine as the first monomer and an aqueous solvent, and

the second solution is a non-aqueous solution containing a polyfunctional acid halide as the second monomer and a non-aqueous solvent.

21. the Method according to claim 19, wherein

the active separation layer is composed of a polyurea,

the first solution is an aqueous solution containing a polyfunctional aromatic amine as the first monomer and an aqueous solvent, and

the second solution is a non-aqueous solution containing a polyfunctional isocyanate as the second monomer and a non-aqueous solvent.

# FIG. 1

20 μm

# FIG. 2

· · · COLUMNAR VOIDS
· · · FINGER-LIKE VOIDS
· · · OTHER VOIDS

20 μm

# FIG. 3

20 μm

# FIG. 4

· · · COLUMNAR VOIDS
· · · FINGER-LIKE VOIDS
· · · OTHER VOIDS

20 μm

# FIG. 5

20 μm

# FIG. 6

■ ・・COLUMNAR VOIDS
▦ ・・FINGER-LIKE VOIDS
▨ ・・OTHER VOIDS

20 μm

# FIG. 7

# FIG. 8

■ · · · COLUMNAR VOIDS
▦ · · · FINGER-LIKE VOIDS
▨ · · · OTHER VOIDS

FIG. 9

20 μm

FIG. 10

· · · COLUMNAR VOIDS
· · · FINGER-LIKE VOIDS
· · · OTHER VOIDS

20 μm

# FIG. 11

# FIG. 12

■ · · · COLUMNAR VOIDS
▥ · · · FINGER-LIKE VOIDS
▦ · · · OTHER VOIDS

## FIG. 13

## FIG. 14

■ · · · COLUMNAR VOIDS
▨ · · · FINGER-LIKE VOIDS
▦ · · · OTHER VOIDS

## FIG. 15

20 μm

## FIG. 16

■ ··· COLUMNAR VOIDS
▦ ··· FINGER-LIKE VOIDS
▨ ··· OTHER VOIDS

20 μm

# FIG. 17

# FIG. 18

■ ···COLUMNAR VOIDS
▦ ···FINGER-LIKE VOIDS
▥ ···OTHER VOIDS

# FIG. 19

# FIG. 20

■ · · · COLUMNAR VOIDS
▦ · · · FINGER-LIKE VOIDS
▥ · · · OTHER VOIDS

## FIG. 21

20 μm

## FIG. 22

■ · · · COLUMNAR VOIDS
▦ · · · FINGER-LIKE VOIDS
▥ · · · OTHER VOIDS

20 μm

FIG. 23

# FIG. 24

THICKNESS OF OUTER COLUMNAR VOID LAYER

WIDTH OF OUTER COLUMNAR VOID LAYER

WIDTH OF INNER COLUMNAR VOID LAYER

THICKNESS OF SPONGE LAYER

THICKNESS OF FINGER-LIKE VOID LAYER

THICKNESS OF INNER COLUMNAR LAYER

20 μm

**INTERNATIONAL SEARCH REPORT**

| International application No. |
| --- |
| PCT/JP2019/036647 |

**A. CLASSIFICATION OF SUBJECT MATTER**

Int.Cl.  B01D69/02(2006.01)i, B01D61/00(2006.01)i, B01D63/02(2006.01)i, B01D69/08(2006.01)i, B01D69/12(2006.01)i, B01D71/68(2006.01)i, D01F1/08(2006.01)i, D01F6/76(2006.01)i

According to International Patent Classification (IPC) or to both national classification and IPC

**B. FIELDS SEARCHED**

Minimum documentation searched (classification system followed by classification symbols)

Int.Cl.  B01D69/02, B01D61/00, B01D63/02, B01D69/08, B01D69/12, B01D71/68, C02F1/44, D01F6/76

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2018-12072 A (ASAHI KASEI CORPORATION) 25 January 2018, embodiments, paragraphs [0028], [0035] (Family: none) | 1-4, 6-8 |
| Y | JP 8-10594 A (ASAHI KASEI INDUSTRY CO., LTD.) 16 January 1996, examples, fig. 4 (Family: none) | 1-4, 6-8 |
| Y | JP 2014-79687 A (ASAHI KASEI CHEMICALS CORP.) 08 May 2014, embodiments, paragraphs [0016], [0032]-[0033], examples (Family: none) | 1-4, 6-8 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 November 2019 (19.11.2019) | 03 December 2019 (03.12.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/036647 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P, X | WO 2019/131304 A1 (KURARAY CO., LTD.) 04 July 2019, paragraphs [0012], [0019]-[0031], [0041]-[0058], examples, claims, fig. 1-2 (Family: none) | 9-11, 13, 15-20 12-21 |
| P, Y | JP 2016-29147 A (PALL CORPORATION) 03 March 2016, embodiments, paragraphs [0031]-[0038], [0059] & US 2015/0376342 A1 & EP 2966109 A1, embodiment, paragraphs [0031]-[0038], [0059] & CN 105218831 A | 12-21 |
| Y | JP 2016-530078 A (BASF SE) 29 September 2016, claims, paragraphs [0029]-[0039], [0089], [0103] & US 2016/0158707 A1, paragraphs [0030]-[0040], [0090], [0104] & WO 2015/000801 A1 & EP 3016733 A1 | 14-21 |
| Y | WO 2016/027869 A1 (ASAHI KASEI CORPORATION) 25 February 2016, claims & US 2017/0266625 A1, claims & EP 3184163 A1 & CA 2958054 A1 | 21 |
| A | US 2014/0175006 A1 (CHEIL INDUSTRIES INC.) 26 June 2014 & CN 103894067 A & KR 10-2014-0082532 A | 1-21 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20160080377
- US 20130313185
- WO 2016027869 A
- JP 2013071106 A
- JP 2014213262 A
- WO 2015141653 A